# EUROPEAN PATENT SPECIFICATION

(11) **EP 4 215 921 B1**
(45) Date of publication and mention of the grant of the patent: **11.02.2026**
(21) Application number: 21868919.8
(22) Date of filing: 08.03.2021
(51) Int. Cl.: G01N 35/00, G01N 35/02, G01N 35/04

(54) **AUTOMATIC ANALYSIS DEVICE**
AUTOMATISCHE ANALYSEVORRICHTUNG
DISPOSITIF D'ANALYSE AUTOMATIQUE

(30) Priority: 17.09.2020 JP 2020156008
(43) Date of publication of application: 26.07.2023
(73) Proprietor: HITACHI HIGH-TECH CORPORATION, Tokyo 105-6409 (JP)
(72) Inventor: NONAKA Kohei, Tokyo 105-6409 (JP); TAKAYAMA Hiroyuki, Tokyo 105-6409 (JP); KAWAHARA Tetsuji, Tokyo 105-6409 (JP)
(74) Representative: MERH-IP Matias Erny Reichl Hoffmann Patentanwälte PartG mbB
(86) International application number: PCT/JP2021/009030
(87) International publication number: WO 2022/059231

(56) References cited:
- WO-A1-2019/031451
- JP-A- 2001 278 409
- JP-A- 2006 308 560
- JP-A- 2014 095 709
- JP-A- 2015 517 675
- JP-A- 2018 136 225
- JP-A- H0 510 948
- JP-A- H0 679 672
- JP-A- S55 140 154
- US-B1- 6 846 455

## Description

### Technical Field

The present invention relates to an automatic analyzer that analyzes a biological sample such as blood and urine (in the following, described as "a sample"), and particularly to an automatic analyzer that enables analysis of more analysis items.

### Background Art

As an example of an automatic analyzer that reduces an operator workload due to tasks such as reagent registration and reagent exchange and minimizes the interruption of analysis with no reagent shortage during analysis, Patent Literature 1 describes an automatic analyzer that dispenses a sample and a reagent into a plurality of reaction vessels for reaction and measures a reacted liquid, the automatic analyzer including a first reagent storage unit that stores a reagent used for reaction, a second reagent storage unit that stores a reagent for an auxiliary, and a reagent transport unit that transports the reagent from the second reagent storage unit to the first reagent storage unit. Patent Literature 2 discloses an automatic analyzer for dispensing a sample and a reagent into a reaction vessel and allowing reaction to occur to measure the reacted liquid.

### Citation List

### Patent Literature

Patent Literature **1:** Japanese Unexamined Patent Application Publication No. 2005-37171
Patent Literature **2:** JP 2018-136225 A

### Summary of Invention

### Technical Problem

Typically, the reagent used in a biochemical automatic analyzer or immune automatic analyzer is managed by mounting a reagent bottle on a reagent disc by an operator to acquire identification information attached to the reagent bottle with a reading mechanism such as an RFID reader or barcode reader mounted on the inside of the analyzer.

In contrast to this, nowadays, the management of the reagent as described in Patent Literature 1 is known, in which a reagent bottle is mounted on a reagent disc mechanism using a mechanism that automatically loads and unloads the reagent bottle.

The technique of automatically loading and unloading the reagent bottle as described in Patent Literature 1 is advantageous that operator workloads due to tasks such as reagent registration and reagent exchange are reduced and the interruption of analysis is minimized with no reagent shortage during analysis.

Here, with the improvement in analysis velocity of nowadays automatic analyzers, reagent consumption is increasing and the interval of reagent bottle exchange is shortening.

Under such situations, in order to accurately manage reagents, the importance is a technique that normally mounts a reagent bottle on a reagent disc. However, the relative positional relationship between the reagent bottle loading and unloading mechanism and the reagent disc mechanism does not become stable due to variations in fabrication of components, for example. As a result, the mechanism units have to be adjusted for each product, resulting in a large workload for operators for adjustment.

Moreover, although the occurrence of the positional displacement of the mechanisms is inevitable due to aged deterioration in the sliding parts, the occurrence of positional displacement may cause the mounting error of the reagent bottle, and in the worst scenario, the operation of the analyzer might stop due to operational failure of the reagent disc, and thus taking measures is necessary.

The present invention is to provide, in an automatic analyzer that is capable of automatically unloading and loading a reagent bottle, an automatic analyzer that reduces operator workloads more than conventional analyzers do and that restrains the analyzer from falling into suspension.

### Solution to Problem

The above-mentioned problem is solved in accordance with the appended set of claims. In particular, an example shows an automatic analyzer including a reagent storage unit to store a reagent bottle containing a reagent to be reacted with a sample; a reagent transport unit to transport the reagent bottle to the reagent storage unit; a reference member provided in one unit of the reagent storage unit and the reagent transport unit, the reference member including at least one of a rib dividing the reagent bottle, a marker, a concave indicating a position at which the reagent bottle is mounted, and a convex indicating a position at which the reagent bottle is mounted; a sensor provided in the other unit of the reagent storage unit and the reagent transport unit, the other unit having no reference member, and detecting the reference member, the sensor including at least one of a reflection sensor comprising a light source and a detector that detects light emitted from the light source and reflected by the reference member, a camera capturing an image of the reference member, and a laser displacement meter measuring a distance to the reference member; and a controller that adjusts a transport parameter of the reagent transport unit using a position of the reference member detected by the sensor.

### Advantageous Effects of Invention

According to the present invention, it is possible to reduce operator workloads more than in conventional analyzers and to restrain the analyzer from falling into suspension. Problems, configurations, and effects except ones described above will be apparent from the description of an embodiment below.

### Brief Description of Drawings

Fig. 1 is a schematic diagram of an overall configuration of an automatic analyzer of an embodiment of the invention.
Fig. 2 illustrates an automatic loader mechanism provided in the automatic analyzer of the embodiment.
Fig. 3 is a schematic diagram of a gripper mechanism of the automatic analyzer of the embodiment.
Fig. 4 is a schematic diagram of a relationship between a rib in a reagent disc or a reagent loading unit and a regent bottle in the automatic analyzer of the embodiment.
Fig. 5 is a schematic diagram of a sensor provided in the gripper mechanism of the automatic analyzer of the embodiment.
Fig. 6 is a schematic diagram of the ribs in the reagent disc and the reagent loading unit in the automatic analyzer of the embodiment.
Fig. 7 is a schematic diagram illustrating sections in an X direction of the reagent disc and the gripper mechanism of the automatic analyzer of the embodiment.
Fig. 8 is a flowchart of automatic adjustment of a position in the X direction of the gripper mechanism relative to the reagent disc in the automatic analyzer of the embodiment.
Fig. 9 is a schematic diagram illustrating sections in a Y direction of the reagent disc and the gripper mechanism of the automatic analyzer of the embodiment.
Fig. 10 is a flowchart of automatic adjustment of a position in a θ direction of the reagent disc relative to the gripper mechanism in the automatic analyzer of the embodiment.
Fig. 11 is a schematic diagram illustrating sections in a Z direction of the reagent disc and the gripper mechanism of the automatic analyzer of the embodiment.
Fig. 12 is a flowchart of automatic adjustment of a position in the Z direction of the gripper mechanism relative to the reagent disc in the automatic analyzer of the embodiment.
Fig. 13 is a schematic diagram illustrating sections in the Y direction of the reagent loading unit and the gripper mechanism of the automatic analyzer of the embodiment.
Fig. 14 is a flowchart of automatic adjustment of a position in the Y direction of the reagent loading unit relative to the gripper mechanism in the automatic analyzer of the embodiment.
Fig. 15 is a schematic diagram including sections in the X direction of the reagent loading unit and the gripper mechanism of the automatic analyzer of the embodiment.
Fig. 16 is a flowchart of automatic adjustment of a position in the X direction of the gripper mechanism relative to the reagent loading unit in the automatic analyzer of the embodiment.
Fig. 17 is a schematic diagram illustrating sections in the Z direction of the reagent loading unit and the gripper mechanism of the automatic analyzer of the embodiment.
Fig. 18 is a flowchart of automatic adjustment of a position in the Z direction of the gripper mechanism relative to the reagent loading unit in the automatic analyzer of the embodiment.
Fig. 19 is a schematic diagram illustrating sections in the Z direction of the reagent disc and the gripper mechanism of the automatic analyzer of the embodiment.
Fig. 20 is a flowchart illustrating operation of checking height and inclination of a reagent-bottle mounting surface of the reagent disc using the gripper mechanism in the automatic analyzer of the embodiment.

### Description of Embodiments

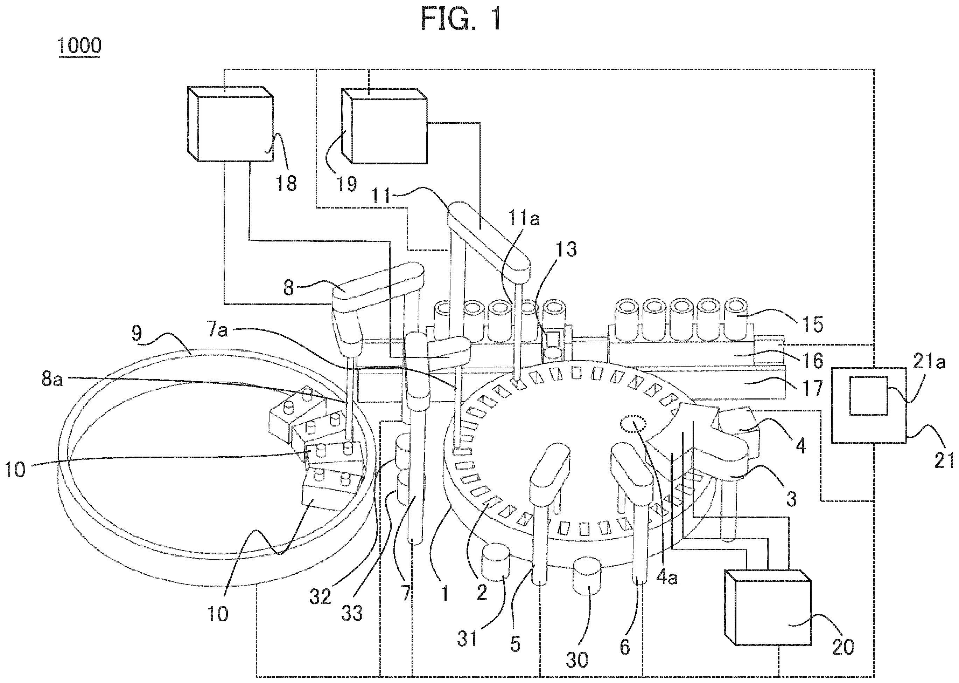

An embodiment of an automatic analyzer according to the present invention will be described with reference to Figs. 1 to 20. Note that in the drawings used in the present specification, the same or the corresponding components are designated with the same, or similar reference signs, and a duplicate description of these components is sometimes omitted.

First, the overall structure of the automatic analyzer will be described with reference to Fig. 1. Fig. 1 is a perspective view of the automatic analyzer of the present embodiment.

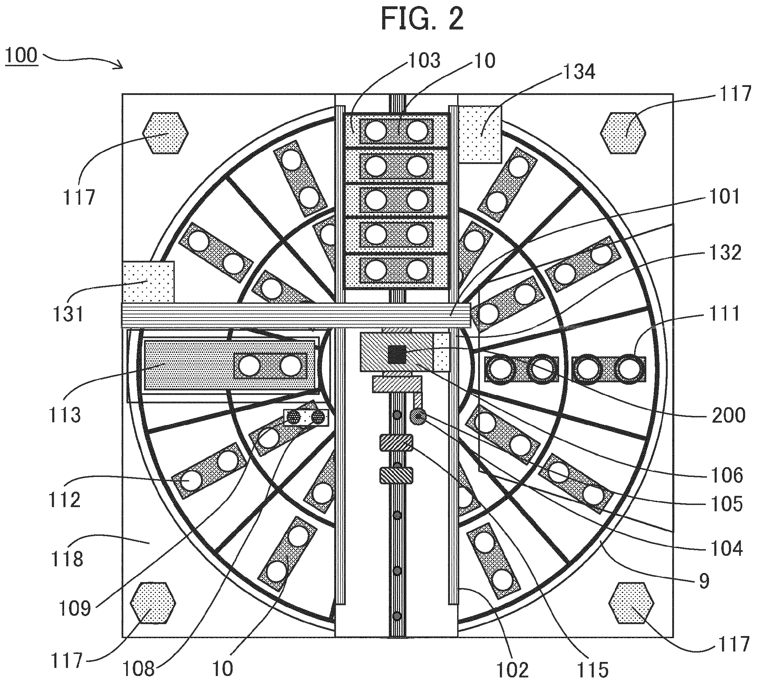

In Fig. 1, an automatic analyzer 1000 is a device that dispenses a sample and a reagent into a reaction vessel 2 for reaction to measure the reacted liquid, the automatic analyzer 1000 including a reaction disc 1, a reagent disc 9, a sample transport mechanism 17, reagent dispensing mechanisms 7 and 8, a reagent syringe 18, a sample dispensing mechanism 11, a sample syringe 19, a washing mechanism 3, a light source 4a, a spectrophotometer 4, stirring mechanisms 5 and 6, a washing pump 20, washing tanks 13, 30, 31, 32, and 33, a controller 21, and an automatic loader mechanism 100 (see Fig. 2).

On the reaction disc 1, the reaction vessels 2 are arranged on the circumference of a circle. Near the reaction disc 1, the sample transport mechanism 17 that moves a rack 16 on which a sample container 15 is placed is mounted.

Between the reaction disc 1 and the sample transport mechanism 17, the sample dispensing mechanism 11 that is rotatable and vertically movable and that includes a sample probe 11a is mounted. To the sample probe 11a, the sample syringe 19 is connected. The sample probe 11a moves while forming an arc about the rotation axis, and dispenses the sample from the sample container 15 to the reaction vessel 2.

The reagent disc 9 has a structure that is capable of storing a plurality of reagent bottles 10 containing the reagent on the circumference of a circle. The detail will be described later.

This reagent disc 9 is kept cool, and covered with a cover having an aspiration port 111 (see Fig. 2) provided. The reagent disc 9 of the present embodiment is supposed not to have any device that obtains information on the reagent in the reagent bottle 10 recorded on an RFID tag attached to the reagent bottle 10 (e.g. an RFID sensor) at all on the inner side of the reagent disc 9.

Between the reaction disc 1 and the reagent disc 9, the reagent dispensing mechanisms 7 and 8 that are rotatable and vertically movable and that respectively include reagent probes 7a and 8a are mounted. To the reagent probes 7a and 8a, the reagent syringe 18 is connected. The reagent probes 7a and 8a move while forming an arc about the rotation axis to make access from the aspiration port 111 to the inside of the reagent disc 9 for dispensing the reagent from the reagent bottle 10 to the reaction vessel 2.

Around the reaction disc 1, the washing mechanism 3, the light source 4a, the spectrophotometer 4, the stirring mechanisms 5 and 6 are further disposed. To the washing mechanism 3, the washing pump 20 is connected. On the operation range of the reagent dispensing mechanisms 7 and 8, the sample dispensing mechanism 11, and the stirring mechanisms 5 and 6, the washing tanks 32, 33, 13, 30, and 31 are mounted. The sample container 15 includes the sample, and the sample container 15 is placed on the rack 16, and carried by the sample transport mechanism 17. Moreover, the mechanisms are connected to the controller 21.

The controller 21 is constituted of a computer and the like, and the controller 21 controls the operation of the mechanisms in the automatic analyzer 1000, and performs arithmetic operation processing that finds a predetermined component in the sample.

The description above is the overall configuration of the automatic analyzer 1000.

The analysis process of the sample by the automatic analyzer 1000 as described above is typically executed according to the following order.

First, the sample in the sample container 15 placed on the rack 16 transported near the reaction disc 1 by the sample transport mechanism 17 is dispensed to the reaction vessel 2 on the reaction disc 1 with the sample probe 11a of the sample dispensing mechanism 11. Subsequently, the reagent used for analysis is dispensed to the reaction vessel 2 to which the sample has been dispensed from the reagent bottle 10 on the reagent disc 9 by the reagent dispensing mechanisms 7 and 8. Subsequently, a mixed solution of the sample and the reagent in the reaction vessel 2 is stirred by the stirring mechanism 5.

After that, light emitted from the light source 4a is transmitted through the reaction vessel 2 containing the stirred mixed solution, and the luminous intensity of the transmitted light is measured by the spectrophotometer 4. The luminous intensity measured by the spectrophotometer 4 is sent to the controller 21 through an A/D converter and an interface. The controller 21 then performs the arithmetic operation to find the concentration of a predetermined component in the sample, and the result is displayed on a display 21a and the like or stored in a storage unit (not illustrated in the drawing).

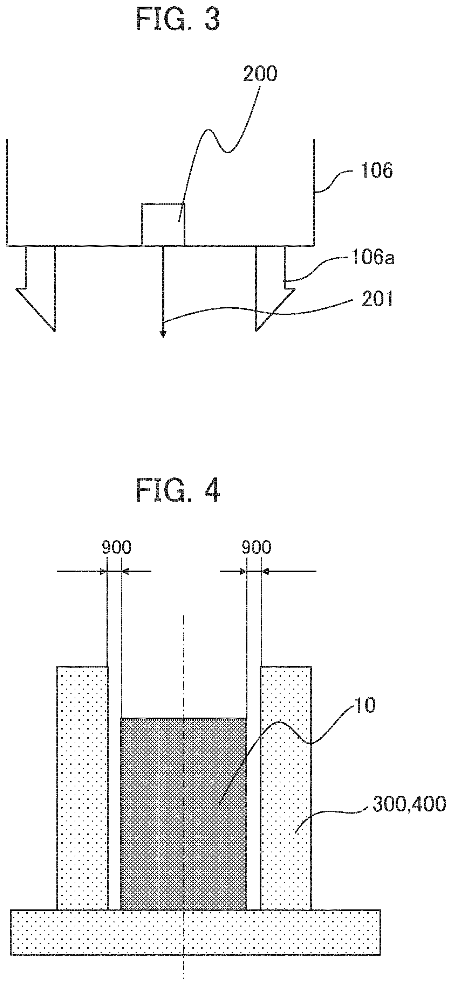

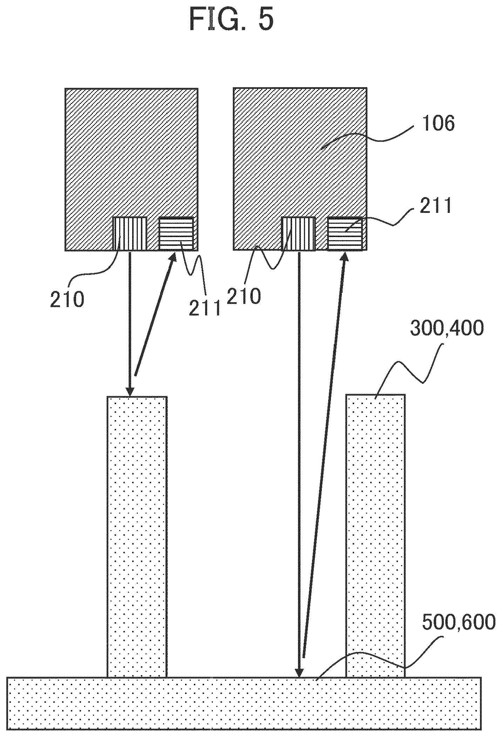

Next, the configuration of the automatic loader mechanism 100 will be described with reference to Figs. 2 to 5. Fig. 2 is a diagram illustrating the outline of the automatic loader mechanism 100. Fig. 3 is a schematic diagram of the gripper mechanism. Fig. 4 is a schematic diagram illustrating the relationship between the reagent disc or the rib of the reagent loading unit and the reagent bottle. Fig. 5 is a schematic diagram of a sensor provided on the gripper mechanism.

As described above, typically, at the position of the reagent probe aspiration port of the reagent bottle 10, a lid 112 is attached to seal the inside, and when the reagent bottle 10 is set in the inside of the automatic analyzer 1000, the lid 112 is removed and the reagent bottle 10 is mounted in the analyzer.

However, nowadays, there is method in which a hole in a notch shape is formed in the lid 112, the reagent probes 7a and 8a are inserted into holes in a notch shape, and a reagent in the reagent bottle 10 is aspirated. In regard to the reagent, since the opening of the lid 112 becomes a micro notch, the reagent has the minimum contact with the outside air, and the degradation of the reagent is improved more than the conventional method.

In such a case, when the operator mounts an unopened, new reagent bottle 10 in the automatic analyzer 1000, a process is performed up to forming a hole in the lid 112 of the reagent bottle 10 to automatically mount the reagent bottle 10 on the reagent disc 9. A mechanism for this purpose is the automatic loader mechanism 100.

The automatic loader mechanism 100 is disposed on the upper part of the reagent disc 9, and has a configuration as illustrated in Fig. 2. In Fig. 2, the automatic loader mechanism 100 includes a reagent loading unit 103, a reagent loading mechanism 102, a reagent transport mechanism 101, a needle washing tank 108, a needle drying port 109, an RFID sensor 115, a strut 117, and a metal plate 118, in a configuration in which these mechanisms are mounted on one metal plate 118 except the strut 117.

The reagent loading unit 103 is a part on which the operator mounts the reagent bottle 10 at the time of charging the reagent bottle 10, and the reagent loading unit 103 is operated by the reagent loading mechanism 102 vertically on Fig. 2. The operation range of the reagent loading unit 103 is held in the analyzer by fastening the reagent loading unit 103 on the metal plate 118 on which the automatic loader mechanism 100 is disposed.

The reagent loading unit 103 has a structure in which a plurality of reagent bottles 10 is mountable on a straight line, and for example, the reagent loading unit 103 is a tray having a plurality of reagent bottle slots on which the reagent bottle 10 is mounted.

The reagent loading mechanism 102 is configured such that the reagent loading unit 103 is movable on a rail along a guide mounted between the charging position of the reagent bottle 10 into analyzer and the standby position of the reagent loading unit 103 by power of a motor and the like.

The reagent transport mechanism 101 is a mechanism that transports the reagent bottle 10 mounted on the reagent loading unit 103 into the reagent disc 9 or that mounts the reagent bottle 10 in the reagent disc 9 on the reagent loading unit 103.

This reagent transport mechanism 101 includes components, a gripper mechanism 106 that grips the reagent bottle 10, a lid opening mechanism 104 that forms a hole in a notch shape in the lid 112 of the reagent bottle 10, a vertical drive motor 132 that vertically moves the lid opening mechanism 104, and a horizontal drive motor 131 that drives the gripper mechanism 106 and the lid opening mechanism 104 in the lateral direction on Fig. 2.

The reagent transport mechanism 101 operates between the position of the reagent loading unit 103 and the position of the access cover 113 in Fig. 2 in the lateral direction on Fig. 2. That is, since the reagent loading unit 103 moves in the vertical direction on Fig. 2 and the reagent transport mechanism 101 operates in the horizontal direction on Fig. 2, the operating directions of the reagent loading unit 103 and the reagent transport mechanism 101 are configured so as to orthogonal to each other. Moreover, in the reagent transport mechanism 101, the position at which the reagent bottle 10 is gripped by the gripper mechanism 106 and the position at which the reagent bottle 10 is loaded into and unloaded from the reagent disc 9 are linearly disposed.

The lid opening mechanism 104 is attached with a needle 105 that forms a notch in the lid 112 of the reagent bottle 10. In the lid opening mechanism 104, the needle 105 having formed the notch in the lid 112 is washed in the needle washing tank 108 disposed in parallel with the operating direction of the reagent transport mechanism 101, and in the subsequent step, the washing water is removed at the needle drying port 109 disposed in parallel with the operating direction of the reagent transport mechanism 101. Thus, a configuration is formed in which the reagent is not thinned with the washing water when the notch is formed in the lid 112 of the reagent bottle 10. Here, as illustrated in Fig. 2, the needle washing tank 108 and the needle drying port 109 are disposed in parallel with the operating direction of the reagent transport mechanism 101.

As illustrated in Fig. 3, the gripper mechanism 106 has a hook 106a that grips the reagent bottle 10, and the reagent bottle 10 is gripped by hooking this hook 106a onto the notch part of the reagent bottle 10.

The access cover 113 is a cover that keeps cold air in the inside of the reagent disc 9 kept cool, and is generally closed. At the time of accessing the reagent transport mechanism 101 to the reagent disc 9, the access cover 113 opens to load and unload the reagent bottle 10 from the reagent disc 9.

The RFID sensor 115 is disposed on the operation path of the reagent loading unit 103, and obtains information on the reagent in the reagent bottle 10 recorded on an RFID tag attached to the reagent bottle 10. Note that reagent information means information such as a type of reagent contained in the reagent bottle and a charged amount. Moreover, instead of the RFID sensor 115, for example, a mechanism that is capable of reading reagent information such as a barcode reader that reads a barcode can be provided.

The description above is the configuration of the automatic loader mechanism 100.

Next, the operation from mounting the reagent bottle 10 on the reagent loading unit 103 by the operator mounts to loading the reagent bottle 10 to the reagent disc 9 will be described.

In the case in which the operator desires to load a new reagent bottle 10 to the reagent disc 9 of the analyzer, first, the button switch of the analyzer (not illustrated in the drawing) is pressed down for the first time. The analyzer recognizes that the operator has pressed the button switch at the first time. Thus, the reagent loading mechanism 102 operates, and the reagent loading unit 103 moves from the standby position and moves to the front of the analyzer (on the lower side of Fig. 2).

After the reagent loading unit 103 arrives the front of the analyzer, the operator mounts the reagent bottle 10 on the reagent loading unit 103.After the necessary number of the reagent bottles 10 are mounted on the reagent loading unit 103, the operator again presses down the button switch.

After it is recognized that the operator has pressed down the button switch, reagent information is read by the RFID sensor 115 installed on the automatic loader mechanism 100. At the time of reading the reagent information, temporary registration of the reagent information is displayed on the display 21a.

After reading the reagent information, the reagent loading unit 103 moves to the lower position of the lid opening mechanism 104. Subsequently, the lid opening mechanism 104 descends toward the lid 112 of the reagent bottle 10, and forms a notch to the extent that the needle 105 can insert the reagent probes 7a and 8a into the lid 112. After the notch is formed in the lid 112 of the reagent bottle 10, the lid opening mechanism 104 ascends, the reagent transport mechanism 101 moves to the position of the needle washing tank 108 in order to wash the needle 105, and the needle 105 is washed. After that, the needle 105 is moved to the needle drying port 109 for drying.

After drying, the reagent loading mechanism 102 operates the reagent loading unit 103 to move the reagent bottle 10 formed with the notch to the lower position of the gripper mechanism 106. After that, the gripper mechanism 106 descends, grips the reagent bottle 10, and then the access cover 113 is opened. After that, the gripper mechanism 106 ascends and moves to the position of the opened access cover 113, and loads the reagent bottle 10 carried at the position of the reagent disc 9, which is empty. After loading, the gripper mechanism 106 is again returned to the position of the reagent loading unit 103.

The operation described above is repeatedly performed on the entire reagent bottles 10 that are installed on the reagent loading unit 103 and that have to be loaded to the reagent disc 9. After the reagent bottles 10 that are mounted on the reagent loading unit 103 had have to be leaded are all loaded to the reagent disc 9, the access cover 113 is closed.

By normally closing the access cover 113, it is recognized that the reagent bottles 10 are normally mounted on the reagent disc 9, and the registration of reagent information is completed. At this time, on the display 21a attached to the analyzer, the registration of the reagent information is turned from temporary registration to definitive registration.

The operations described above are the operations from mounting the reagent bottle 10 by the automatic loader mechanism 100, reading the reagent information, forming a hole in the lid 112 of the reagent bottle 10, loading the reagent bottle 10 on the reagent disc 9, and registering reagent information.

In the case in which the reagent mounted in the reagent disc 9 becomes empty, the reagent bottle 10 is unloaded according to the following flow. In regard to the timing of unloading the reagent bottle 10, the reagent bottle 10 may be unloaded after finishing the final dispensing of the reagent dispensing mechanisms 7 and 8 even during analysis, or after outputting an analysis result.

First, the controller 21 opens the access cover 113. Moreover, the reagent transport mechanism 101 moves to the position of the opened access cover 113. Subsequently, the gripper mechanism 106 grips the empty reagent bottle 10. Furthermore, in parallel with this process, the reagent loading unit 103 moves from the standby position, and stops at the position at which the empty reagent bottle slot of the reagent loading unit 103 is located below the track of the gripper mechanism 106.

. Subsequently, the reagent transport mechanism 101 moves at the position of the reagent loading mechanism 102 with the empty reagent bottle 10 gripped by the gripper mechanism 106. In parallel with this process, the access cover 113 is closed. At this time, it is determined that the reagent bottle 10 has been able to normally unloaded, and on the display 21a, the removal of the reagent information that has been definitively registered is displayed. After that, the gripper mechanism 106 places the empty reagent bottle 10 on the empty reagent bottle slot of the reagent loading unit 103. After that, the reagent loading mechanism 102 returns to the standby position.

After that, the operator is notified that the empty reagent bottle 10 is ready to be taken out by the display 21a and the like.

Upon receiving this notification, the operator takes the empty reagent bottle 10 out of the analyzer.

Moreover, in the case in which the reagent bottle 10 is mounted on all the reagent slots of the reagent loading unit 103 and the reagent bottle 10 mounted on the reagent disc 9 becomes empty and is desired to be discarded out of the analyzer, one or a few empty reagent slots are provided for the number of the reagent bottles 10 that are mountable on the reagent disc 9. Further, the reagent bottle 10 mounted on the reagent loading unit 103 is loaded to the reagent disc 9 with no notch in the lid 112, the empty reagent bottle, 10 is gripped by the gripper mechanism 106 and placed on the reagent loading unit 103, and then the operator unloads the empty reagent bottle 10. After unloaded, the reagent bottle 10 with no notch mounted on the reagent disc 9 can be again returned to the empty reagent slot. When an empty slot is provided on the reagent loading unit 103, the similar operation is feasible.

Here, in the operation of mounting the reagent bottle 10 on the reagent loading unit 103 and the operation of discharging the reagent bottle 10, which are described above, in order to perform stable mounting and discharge, the accuracy of the positional relationship between the reagent disc 9 and the gripper mechanism 106 and the positional relationship between the reagent loading unit 103 and the gripper mechanism 106 is significantly important. In the following, the reason will be described.

In the case in which the positional displacement of the reagent bottle 10 to the gripper mechanism 106 occurs in the operation of the reagent disc 9 and the reagent loading unit 103, it is likely that the reagent bottle 10 is gripped at its part that does not have to be originally gripped by the gripper mechanism 106 leading to unstable gripping. Moreover, when displacement increases, the reagent bottle 10 might not be gripped in the worst scenario.

Furthermore, in the case in which the positional displacement of the reagent bottle 10 to the lid opening mechanism 104 occurs in the operation of the reagent loading unit 103, it is likely that a notch is formed at a position displaced from the center position of the lid 112 in the operation of forming a notch to the extent that the reagent probes 7a and 8a are insertable into the lid 112, by the needle 105 and an unnecessary load is applied to the reagent probes 7a and 8a at the time of aspiration. Moreover, when displacement increases, in some cases, it no notch can be formed in the worst scenario, or it is likely that a notch is formed at a place where no notch is necessary to increase contact between the reagent and the outside air, which result in the progress of degradation of the reagent.

Here, on the reagent disc 9, a rib 300 that defines the reagent bottle 10 is provided on a mounting surface 500 of the reagent disc 9, and similarly on the reagent loading unit 103, a rib 400 that defines the reagent bottle 10 is provided on a mounting surface 600. A gap 900 between the ribs 300 and 400 and the reagent bottle 10 illustrated in Fig. 4 is set to 0.5 mm or less in consideration of the risks described above.

Since the gap 900 between the ribs 300 and 400 and the reagent bottle 10 is 0.5 mm or less, in the case in which the positional relationship between the positional relationship between the reagent disc 9 and the gripper mechanism 106 and the positional relationship between the reagent loading unit 103 and the gripper mechanism 106 are impaired, it is likely that the reagent bottle 10 rides on the rib 300 in the operation of mounting the reagent bottle 10 on the reagent disc 9 by the gripper mechanism 106. Moreover, also in the operation to the reagent loading unit 103, it is likely that the reagent bottle 10 similarly rides on the rib 400.

Furthermore, since the positional relationships of these mechanisms vary for each analyzer in association with variations in components, an operator who fixes the analyzer has to manually adjust using a jig and the like exclusive use for adjustment. Moreover, in association with aged deterioration of the drive units, it is also considered that positional relationships are displaced, and in the worst scenario, the analyzer stops during analysis.

From the description above, positional relationships between these components are significantly important for the reagent disc 9, the gripper mechanism 106, the reagent loading unit 103, and a mechanism having a plurality of drive shafts.

As a result of dedicatedly investigating by the present inventors regarding a scheme to solve these problems, it has been conceived that a sensor (a light source 210 + a detector 211) is provided on the gripper mechanism 106 to detect the rib 300 provided on the reagent disc 9 or the rib 400 provided on the reagent loading unit 103 for automatically adjusting the positions of the reagent disc 9 and the gripper mechanism 106 or the positions of the reagent loading unit 103 and the gripper mechanism 106.

Moreover, it has also been conceived that the member, which is a reference, is not limited to the ribs 300 and 400, a marker or an irregular shoe for mounting the reagent is usable, the sensor is not limited to a reflective type and a camera, a laser displacement gage, and the like are usable, the member, which is a reference, and the sensor are any type, which may be a fixed type and a removable type, except the components originally provided.

In the following, the detail will be described.

In the present embodiment, as illustrated in Fig. 5, a sensor 200 is provided on the gripper mechanism 106 of the reagent transport mechanism 101. The sensor 200 includes the light source 210 and the detector 211, and is capable of grasping a distance from the sensor 200 to the target surface using triangulation. With the use of this sensor 200, for example, a distance from the gripper mechanism 106 to the rib 300 provided on the mounting surface 500 of the reagent disc 9 or a distance from the gripper mechanism 106 to the rib 400 provided on the mounting surface 600 of the reagent loading unit 103 is detected.

In the controller 21, based on the position of the rib 300 or the rib 400 detected by the reflective sensor 200, the transport parameter of the reagent transport mechanism 101 is adjusted.

Note that the sensor 200 may be one that is built in the gripper mechanism 106 or may be one that is detachable. The detachable structure is not limited specifically, and various publicly known schemes are adoptable. Thus, the application of the technique according to the present invention to existing analyzers is significantly made easy.

Moreover, in the following description, the sensor 200 is supposed to perform detection that an optical axis 201 is located at the center of the gripper mechanism 106.

Here, the sensor 200 may be located at any position of the gripper mechanism 106. In this case, it is necessary to reflect the distance from the optical axis 201 of the sensor 200 to the center of the gripper mechanism 106 further as a correction value in the description below.

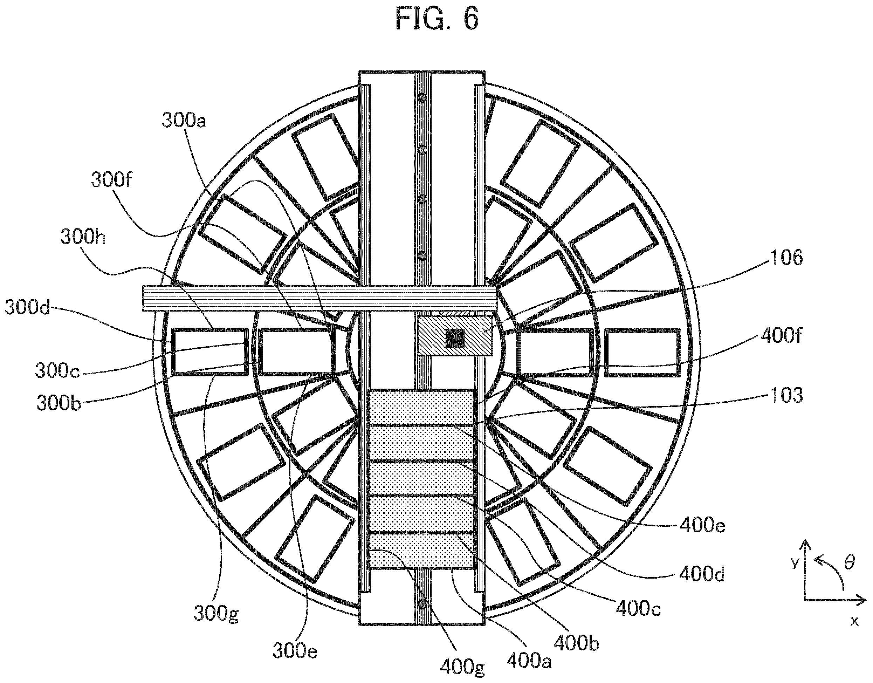

In the following, the detail of automatic adjustment will be described with reference to Figs. 6 to 20.

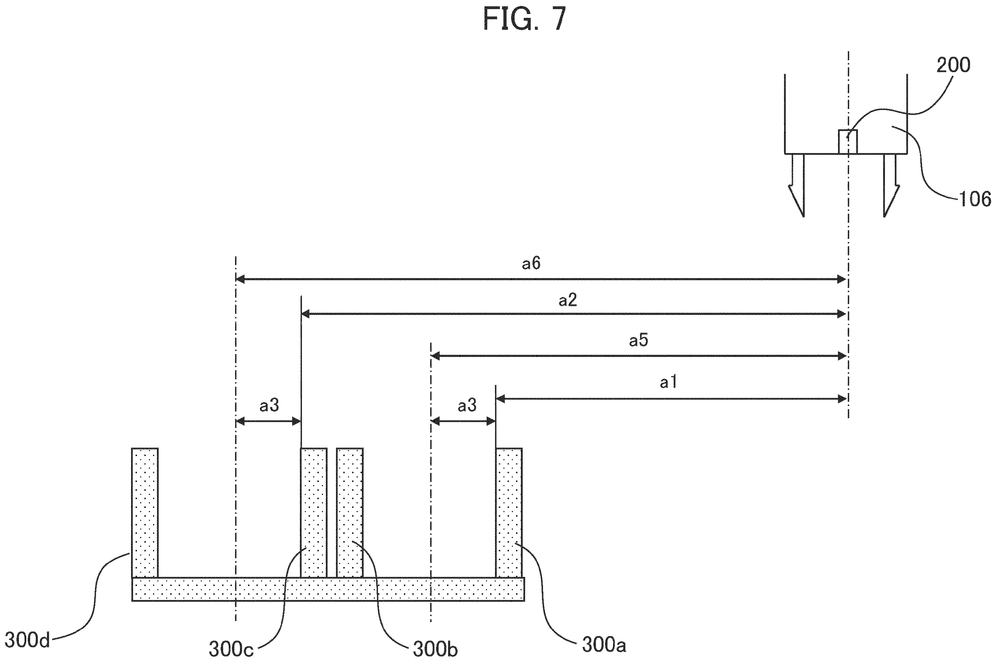

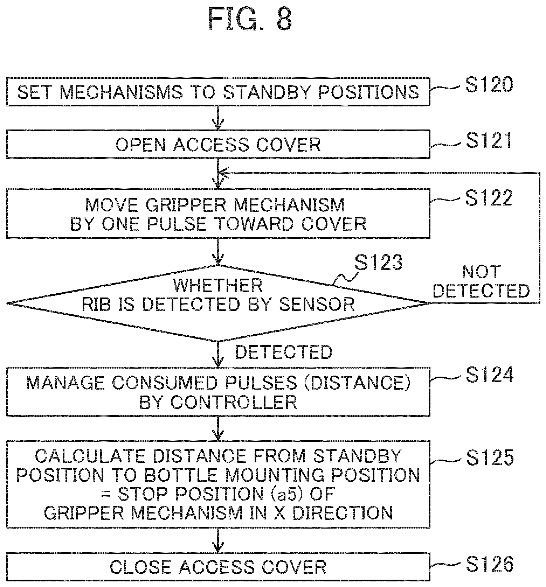

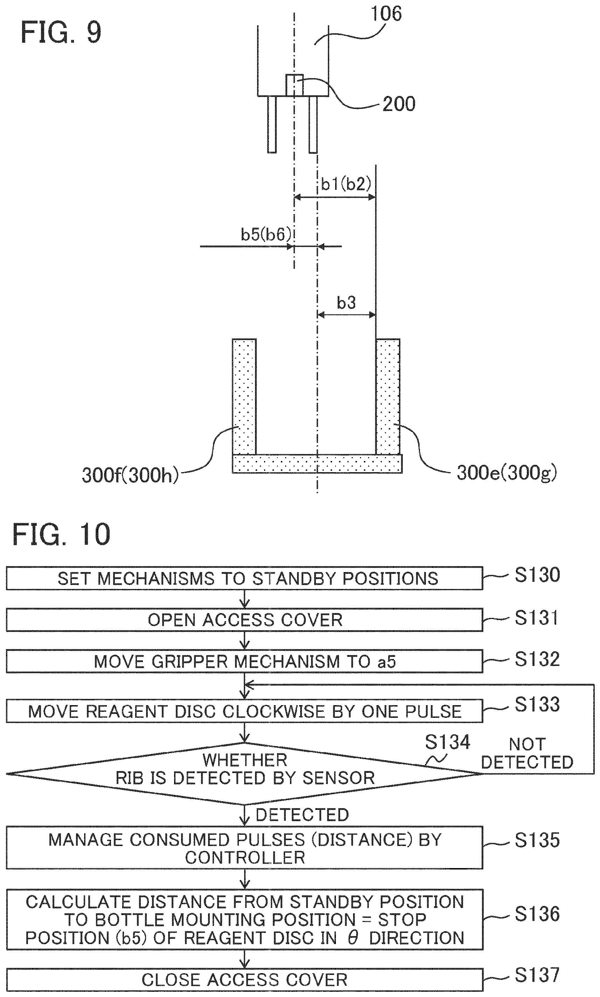

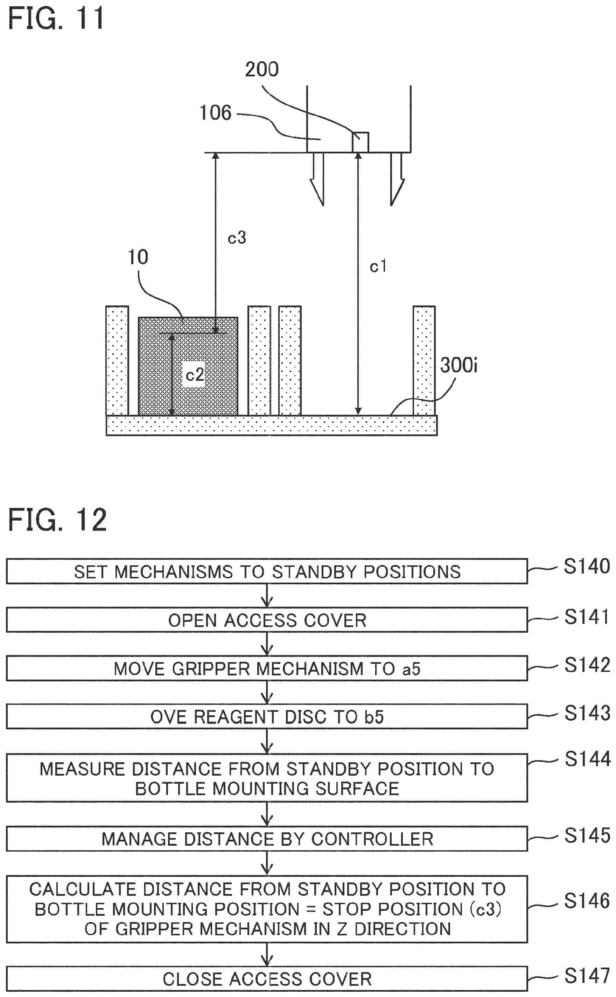

First, the detail of the position adjustment of the reagent disc 9 and the reagent transport mechanism 101 will be described with reference to Figs. 6 to 12. Fig. 6 is a schematic diagram illustrating the reagent disc and the ribs of the reagent loading unit. Fig. 7 is a schematic diagram illustrating a cross sectional view to the X-direction of the reagent disc and the gripper mechanism. Fig. 8 is a flowchart of automatically adjusting the position of the gripper mechanism (in the X-direction) to the reagent disc. Fig. 9 is a schematic diagram illustrating a cross sectional view in the Y-direction of the reagent disc and the gripper mechanism. Fig. 10 is a flowchart of automatically adjusting the position of the reagent dis (in a θ direction) to the gripper mechanism. Fig. 11 is a schematic diagram illustrating a cross sectional view in the Z-direction of the reagent disc and the gripper mechanism. Fig. 12 is a flowchart of automatically adjusting the position of the gripper mechanism (in the Z-direction) to the reagent disc.

As a premise, components on the mounting surface 500 of the reagent disc 9 and the mounting surface 600 of the reagent loading unit 103 will be described with reference to Fig. 6.

As illustrated in Fig. 6, in the reagent disc 9, the plurality of reagent bottles 10 is concentrically mountable. In the radial direction, from the inner radius side, ribs 300a and 300b that set the mounting position on the inner radius side and ribs 300c and 300d that set the mounting position on the outer radius side are provided. Moreover, in the circumferential direction, ribs 300e and 300f are provided on the inner radius side, and ribs 300g and 300h are provided on the outer radius side. The mounting position on the inner radius side is set by the ribs 300a, 300e, 300b, and 300f, and the mounting position on the outer radius side is set by the ribs 300c, 300g, 300d, and 300h.

In Fig. 6, the reagent loading unit 103 is operable to install five reagentbottles 10. In Fig. 6, from the lower side, ribs .400a, 400b, 400c, 400d, and 400e are provided. On the back side from the rib 400e, a wall higher than the rib is provided. On the side surface side of these ribs 400a, 400b, 400c, 400d, and 400e, ribs 400f and 400g are provided.

In the present embodiment, as illustrated in Fig. 6, in Fig. 6, the traveling direction of the reagent loading unit 103 is defined as an X-direction, and the traveling direction of the gripper mechanism 106 is defined as a Y-direction, and the vertical direction on the surface of Fig. 6 is defined as a Z-direction. Moreover, the direction of a rotation component on an X-Y plane is defined as the θ direction.

Subsequently, with the use of the sensor 200 described above, an example of the automatic adjustment of the horizontal positions of the reagent disc 9 and the gripper mechanism 106 will be described with reference to Figs. 7 and 8.

Note that the operation of automatic adjustment described below is controlled by the controller 21.

First, as illustrated in Figs. 7 and 8, the reagent disc 9 and the gripper mechanism 106 are moved to standby positions, and the operation is started (Step S120).

Subsequently, the access cover 113 is opened (Step S121). Subsequently, the gripper mechanism 106 is operated in the direction of the access cover 113. At this time, in the case in which the horizontal drive motor 131 of the gripper mechanism 106 is a stepping motor, the horizontal drive motor 131 is driven by one pulse (Step S122), and after moved, the presence or absence of detection of the rib 300a is confirmed using the sensor 200 (Step S123).

In the case in which the rib 300a has not been detected, the process is returned to Step S122, and the horizontal drive motor 131 is again driven by one pulse.

In the case in which the rib 300a has been detected, by the total number of pulses given at the time of detection by the controller 21, a distance a1 from the standby position of the gripper mechanism 106 to the rib 300a is grasped and managed (Step S124).

The processes from Step S120 to Step S124 are repeated, and thus it is also possible to grasp a distance a2. from the standby position of the gripper mechanism 106 to the rib 300c.

Note that in the case in which the drive motor includes an encoder that is capable of grasping rotation speed and positions, it is possible to grasp the distances a1 and a2 described above by operating the drive motor at a constant velocity, and it is possible to shorten time until the distance is grasped as compared with the stepping motor.

As illustrated in Fig. 7, the center position between the rib 300a and the rib 300b, which are the mounting position of the reagent bottle 10, and a center position a3 between the rib 300c and the rib 300d are fixed values. A distance a5 obtained by adding the distance a3 to the distance a1 grasped in the processes in Step S120 to Step S124 and a distance a6 obtained by adding the distance a3 to the distance a2 are the stop position of the gripper mechanism 106 to the reagent disc 9. Therefore, the controller 21 sets the stop positions a5 and a6 of the gripper mechanism 106 to the reagent disc 9 in the X-direction (Step S125), and closes the access cover 113 (Step S126) .

Fig. 9 and as illustrated in Figs. 9 and 10, at any timing, immediately after the completion of adjusting the stop positions a5 and a6 described above or after a lapse of a predetermined time period, subsequently, the controller 21 again moves the reagent disc 9 and the gripper mechanism 106 to the standby positions (Step S130).

After that, the access cover 113 is opened (Step S131). Subsequently, the gripper mechanism 106 is moved to the mounting position a5 of the reagent bottle 10 on the inner radius side of the reagent disc 9 (Step S132). At this time, the position to which the gripper mechanism 106 is moved is set in Step S125.

After that, the reagent disc drive motor (not illustrated in the drawing) is driven by one pulse (Step S133), after rotated, the rib 300e the presence or absence of detection of is confirmed using the sensor 200 (Step S134) .

Note that the reagent disc 9 and the reagent disc drive motor are connected to each other with a gear or a belt. In consideration of a backlash in the gear or the belt, the rotation direction of the reagent disc 9 and the reagent disc drive motor described above is the same as the traveling direction of the reagent disc 9 and the reagent disc drive motor to the standby position.

In the case in which no detection has been made by the sensor 200, the process is returned to Step S133, and the reagent disc drive motor is driven by one pulse.

In the case in which detection has been made, a distance b1 from the standby position of the reagent disc 9 to the rib 300e is grasped and managed by the total number of pulses given at the time of detection (Step S135).

The operations in Step S131 to S135 are applied to the mounting position a6 of the reagent bottle 10 on the outer radius side of the reagent disc 9, and thus it is also possible to grasp a distance b2 from the standby position of the reagent disc 9 to the rib 300g.

Note that in the case in which the drive motor includes an encoder that is capable of grasping rotation speed and positions, it is possible to grasp the distances b1 and b2 described above by operating the drive motor at a constant velocity, and it is possible to shorten time until the distance is grasped as compared with the stepping motor.

As illustrated in Fig. 9, the center position b3 between the rib 300e and the rib 300f, which are the mounting positions of the reagent bottle 10, and the center position b3 between the rib 300g and the rib 300h are fixed values. A distance b5 obtained by subtracting the distance b3 from the distance b1 grasped by the operation described above and a distance b6 obtained by subtracting the distance b3 from the distance b2 are the stop position of the reagent disc 9 to the gripper mechanism 106. Therefore, the controller 21 sets the stop positions b5 and b6 of the gripper mechanism 106 to the reagent disc 9 in the θ direction (Step S136). After that, the access cover 113. is closed (Step S137).

Next, a flow of the automatic adjustment of the positions of the reagent disc 9 and the gripper mechanism 106 in the vertical direction using the sensor 200 will be described below with reference to Figs. 11 and 12.

First, as illustrated in Figs. 11 and 12, the reagent disc 9 and the gripper mechanism 106 are moved to the standby positions, and the operation is started (Step S140).

After that, the access cover 113 is opened (Step S141). Subsequently, the gripper mechanism 106 is moved to the stop position a5 set in Step S125 described above (Step S142), and the reagent disc 9 is horizontally moved to the stop position b5 set in Step S136 described above (Step S143). Note that the stop position of the gripper mechanism 106 may be a6, or the stop position of the reagent disc 9 may be b6.

Subsequently, a distance c1 from the standby position to the reagent-bottle mounting surface 500 of the reagent disc 9 against the gripper mechanism 106 in the vertical direction is grasped using the sensor 200 (Step S144). The grasped distance is managed by the controller 21 (Step S145).

As illustrated in Fig. 11, in the case in which a height obtained by adding the height of the reagent bottle 10 to the cushion amount of the gripper mechanism 106 necessary to hook the hook 106a onto the notch part of the reagent bottle 10 is defined as c2, a height c3 of the gripper mechanism 106 at the time of mounting the reagent bottle 10 on the reagent disc 9 and at the time of gripping the reagent bottle 10 from the reagent disc 9 is value obtained by subtracting c2 from the distance c1 acquired by the sensor described above, and c3 is the stop position of the gripper mechanism 106 in the vertical direction. Therefore, the controller 21 sets the stop position c3 of the gripper mechanism 106 in the Z-direction (Step S146). After that, the access cover 113 is closed (Step S147).

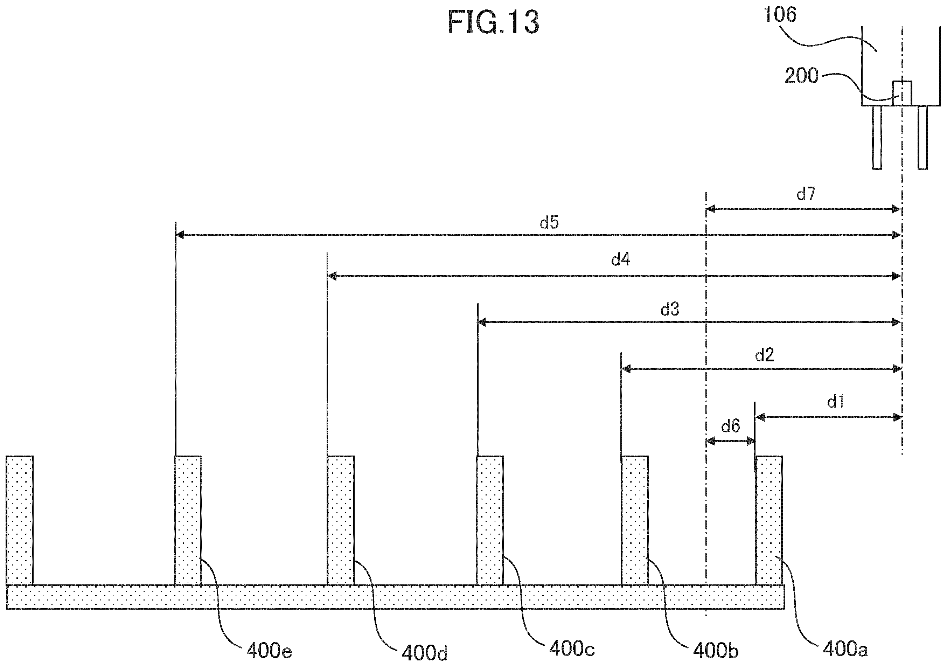

Next, an example of the automatic adjustment of the positions of the reagent loading unit 103 and the gripper mechanism 106 using the sensor 200 will be described below with reference to Figs. 13 to 18.

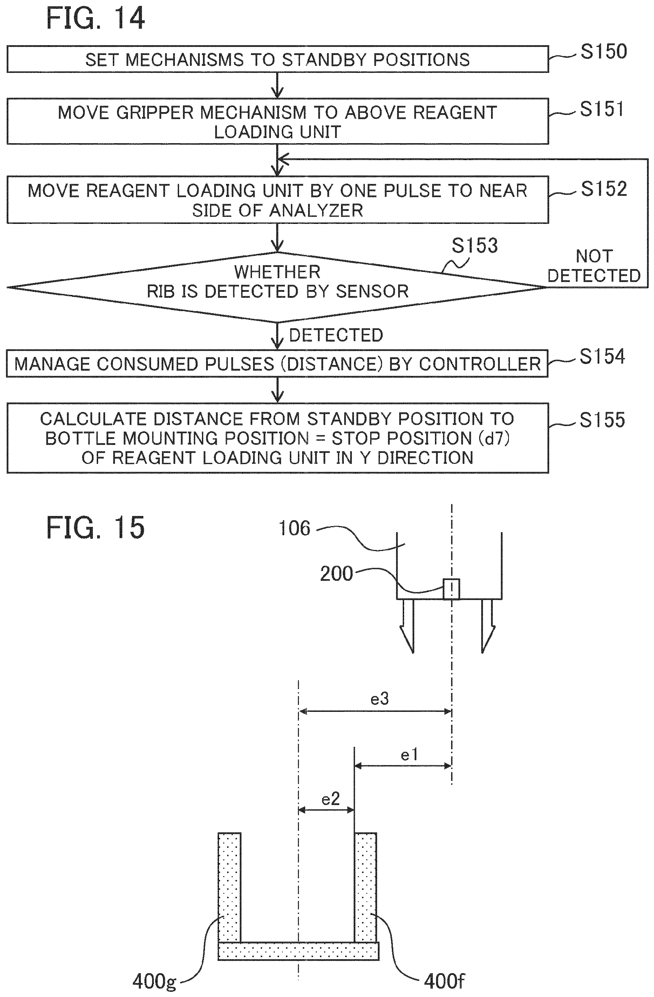

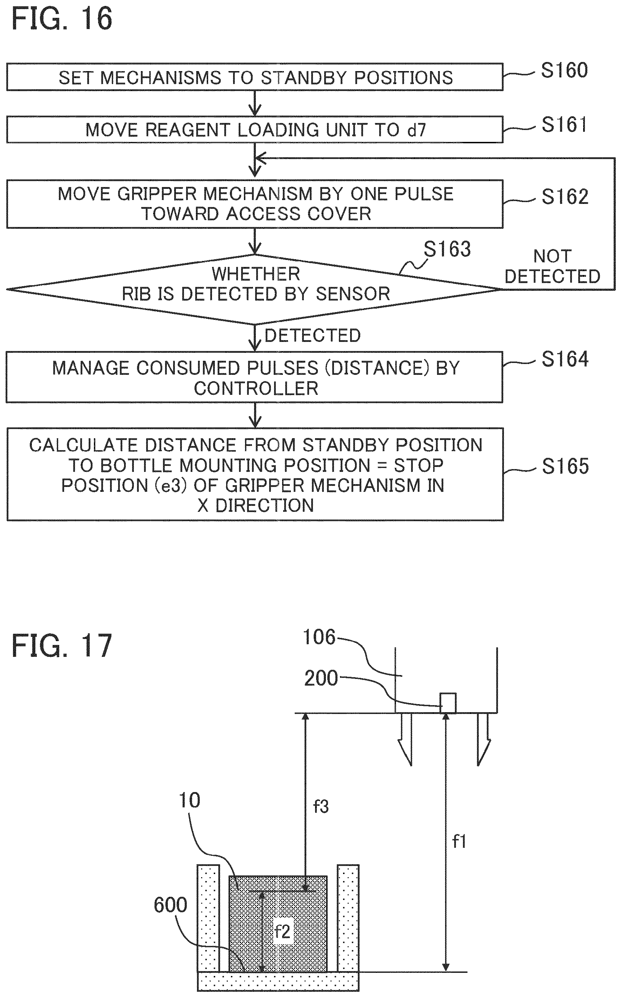

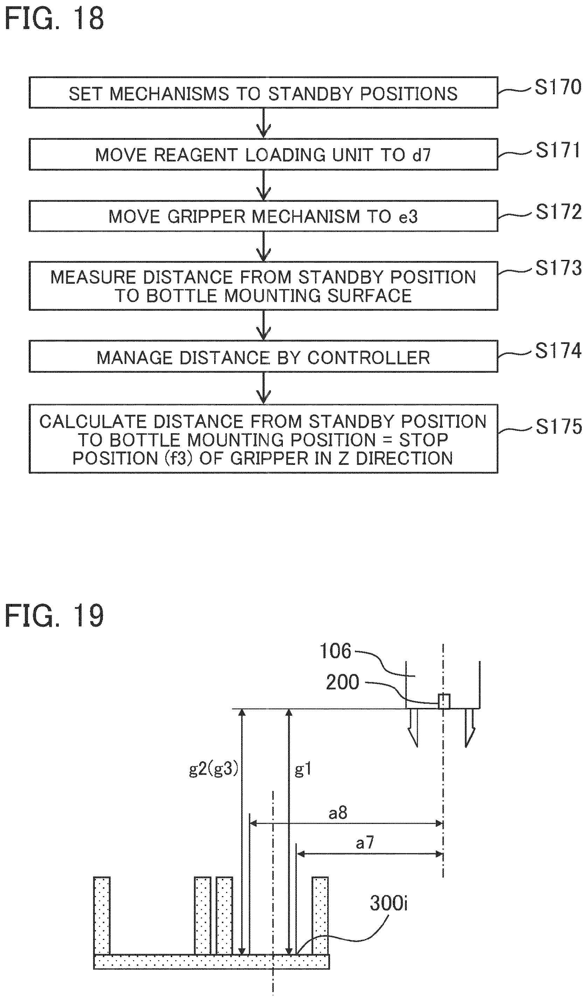

Fig. 13 is a schematic diagram illustrating a cross sectional view of the reagent loading unit and the gripper mechanism in the Y-direction. Fig. 14 is a flowchart of automatically adjusting the position of the reagent loading unit (in the Y-direction) to the gripper mechanism. Fig. 15 is a schematic diagram illustrating a cross sectional view of the reagent loading unit and the gripper mechanism in the X-direction. Fig. 16 is a flowchart of automatically adjusting the position of the gripper mechanism (in the X-direction) to the reagent loading unit. Fig. 17 is a schematic diagram illustrating a cross sectional view of the reagent loading unit and the gripper mechanism in the Z-direction. Fig. 18 is a flowchart of automatically adjusting the position of the gripper mechanism (in the Z-direction) to the reagent loading unit.

First, a flow of the automatic adjustment of the horizontal position of the reagent loading unit 103 and the gripper mechanism 106 will be described.

As illustrated in Figs. 13 and 14, the reagent loading unit 103 and the gripper mechanism 106 are moved to the standby positions, and the operation is started (Step S150).

After that, the gripper mechanism 106 is operated in the direction of the access cover 113, and is stopped on the track of the reagent loading unit 103 (Step S151). Note that the stop position of the gripper mechanism 106 is a temporary position to which no control value is reflected.

Subsequently, in the case in which a drive motor 134 of the reagent loading unit 103 is a stepping motor, the drive. motor 134 is driven by one pulse, the reagent loading unit 103 is moved to front of the analyzer (Step S152), and after moved, the rib 400a the presence or absence of detection of is confirmed using the sensor 200 (Step S153).

In the case in which no detection has been made by the sensor 200, the process returns to Step S152, and the drive motor 134 is driven by one pulse.

In the case in which detection has been made, the controller 21 grasps and manages a distance d1 from the standby position of the reagent loading unit 103 to the rib 400a is grasped and managed by the total number of pulses given at the time of detection (Step S154).

Be repeating the processes in Step S151 to S154, it is also possible to grasp distances d2, d3, d4, and d5 from the standby position of the reagent loading unit 103 to the ribs 400b, 400c, 400d, and 400e.

Note that in the case in which the drive motor includes an encoder that is capable of grasping rotation speed and positions, it is possible to grasp the distances d1 to d5 described above by operating the drive motor at a constant velocity, and it is possible to shorten time until the distance is grasped as compared with the stepping motor.

As illustrated in Fig. 13, the center of a distance distance d6 between the rib 400a and the rib 400b, which are the mounting positions of the reagent bottle 10, is a fixed value. A distance d7 obtained by adding the distance d6 to the distance d1 grasped by the operation described above is the stop position of the reagent loading unit 103 at the reagent installation position to the gripper mechanism 106. Therefore, the controller 21 sets the stop position d7 of the reagent loading unit 103 in the Y-direction (Step S155).

Moreover, the setting of the stop position described above is similarly applied to the distances d2, d3, d4, and d5, and thus it is possible to define the stop position to the other mounting positions of the reagent loading unit 103.

Upon completion of adjusting the stop position of the reagent loading unit 103 in the Y-direction described above, as illustrated in Figs. 15 and 16, the reagent loading unit 103 and the gripper mechanism 106 are moved to the standby positions (Step S160).

After that, the reagent installation position of the reagent loading unit 103 is moved to the stop position d7 described above (Step S161). Subsequently, the horizontal drive motor 131 of the gripper mechanism 106 is driven by one pulse, and the gripper mechanism 106 is moved in the direction of the access cover 113 (Step S162).

After moved, the rib 400f the presence or absence of detection of is confirmed using the sensor 200 (Step S163).

In the case in which no detection has been made by the sensor 200, the process returns to Step S162, and the horizontal drive motor 131 is driven by one pulse.

In the case in which detection has been made, the controller 21 grasps and manages a distance e1 from the standby position of the gripper mechanism 106 to the rib 400f by the total number of pulses given at the time of detection (Step S164).

Note that in the case in which the drive motor includes an encoder that is capable of grasping rotation speed and positions, it is possible to grasp the distance e1 described above byoperating the drive motor at a constant velocity, and it is possible to shorten time until the distance is grasped as compared with the stepping motor.

As illustrated in Fig. 15, the center of a distance e2 between the rib 400f and the rib 400g, which are the mounting positions of the reagent bottle 10, is a fixed value. A distance e3 obtained by adding the distance e2 to the distance e1 grasped by the operation described above is the stop position of the gripper mechanism 106 to the reagent loading unit 103. Therefore, the controller 21 defines the stop position e3 of the gripper mechanism 106 in the X-direction to the reagent loading unit 103 (Step S165).

Next, an example of the automatic adjustment of the positions of the reagent loading unit 103 and the gripper mechanism 106 using the sensor 200 in the vertical direction will be described below.

First, as illustrated in Figs. 17 and 18, the reagent loading unit 103 and the gripper mechanism 106 are moved to the standby positions, and the operation is started (Step S170).

After that, the reagent loading unit 103 is moved to the stop position d7 set in Step S155 described above (Step S171), and the gripper mechanism 106 is moved to the stop position e3 set in Step S165 described above in the horizontal direction (Step S172).

Subsequently, a distance f1 from the standby position to the reagent-bottle mounting surface 600 of the reagent loading unit 103 to the gripper mechanism106 in the vertical direction is grasped using the sensor 200 (Step S173). The grasped distance is managed by the controller 21 (Step S174).

As illustrated in Fig. 17, in the case in which a height obtained by adding the height of the reagent bottle 10 to the cushion amount of the gripper mechanism 106 necessary to hook the hook 106a onto the notch part of the reagent bottle 10 is defined as f2, a height f3 of the gripper mechanism 106 at the time of mounting the reagent bottle 10 on the reagent loading unit 103 and at the time of gripping the reagent bottle 10 from the reagent loading unit 103 is a value obtained by subtracting f2 from the distance f1 acquired by the sensor described above, and f3 is the stop position of the gripper mechanism 106 in the vertical direction. Therefore, the controller 21 sets the stop position f3 of the gripper mechanism 106 in the Z-direction (Step S175).

Note that the lid 112 belonging to the reagent bottle 10, the needle washing tank 108, and the needle drying port 109 are sometimes provided with a taper. Moreover, the needle 105 is sometimes provided with a taper as well.

In such a case even though a positional displacement occurs more or less in the horizontal direction of the lid 112, the needle washing tank 108, and the needle drying port 109 to the needle 105, this positional displacement can be corrected. Therefore, although position adjustment is not required for the lid opening mechanism 104 in the horizontal direction of the needle washing tank 108 and the needle drying port 109, the position adjustment may be executed.

Moreover, the needle 105 is sometimes provided with a cushioning material. As a result, even though a positional displacement occurs more or less in the vertical direction of the lid 112, the needle washing tank 108, and the needle drying port 109 to the needle 105, this positional displacement can be corrected. Therefore, although position adjustment is not required for the lid opening mechanism 104 in the vertical direction of the needle washing tank 108 and the needle drying port 109, the position adjustment may be executed.

By the processes described above, the position adjustment of the reagent disc 9, the reagent loading unit 103, and the gripper mechanism 106 in the horizontal direction and the vertical direction is completed. The position adjustment of the mechanisms is necessary at the time of fixing the analyzer and at the time of dismounting and mounting the mechanisms. By using the automatic adjustment described above, it is possible to eliminate the number of man-hours of operators, and it is possible to contribute to a considerable reduction in the number of man-hours for fixing the analyzer and the number of man-hours for maintenance tasks.

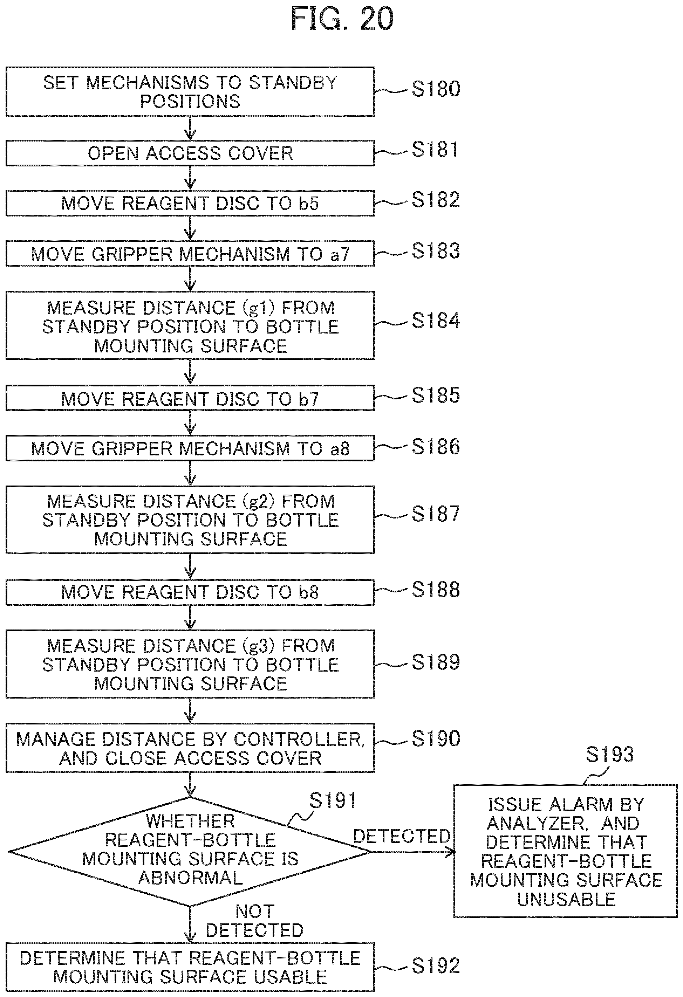

Moreover, an example of the automatic adjustment specific to the reagent disc 9 will be described with reference to Figs. 19 and 20. Fig. 19 is a schematic diagram illustrating a cross sectional view in the Z-direction of the reagent disc and the gripper mechanism. Fig. 20 is a flowchart illustrating the operation of confirming the height and inclination of the reagent-bottle mounting surface 500 of the reagent disc using the gripper mechanism.

The reagent disc 9 also has a problem described below.

For example, typically the reagent disc 9 is prepared by solid casting or by splitting parts. Since the shape of the reagent disc 9 is large and the support point is only the rotation center of the reagent disc 9, and it is considered that distortion occurs on the reagent-bottle mounting surface of the reagent disc 9 with gravity.

The reagent-bottle mounting surface 500 of the reagent disc 9 illustrated in Fig. 19 is distorted, and it is likely to affect the reagent dispensing performance of the reagent probes 7a and 8a.

More specifically, the reagent probes 7a and 8a move while forming an arc about the rotation axis, access the inside of the reagent disc 9 from the aspiration port 111, and dispense the reagent from the reagent bottle 10 to the reaction vessel 2.

At this time, the reagent disc 9 is distorted, variations occur in the heights of the reagent-bottle mounting surface 500, the height of the liquid levels of the reagent bottles 10 viewed from the reagent probes 7a and 8a even using the same reagent bottle 10, and this might affect the reagent dispensing performance. Moreover, in the case in which an inclination occurs on the reagent-bottle mounting surface 500, it is likely that the reagent probes 7a and 8a fail to be inserted into the notch of the lid 112, leading to a bend of the probe and stopping the analyzer.

For the purpose of preventing these problems from occurring, it is possible to grasp variations in the height and the inclination of the reagent-bottle mounting surface 500 using the sensor 200 included in the gripper mechanism 106.

As illustrated in Fig. 20, the reagent disc 9 and the gripper mechanism 106 are moved to the standby position to start adjustment (Step S180).

After that, the access cover 113 is opened (Step S181). Subsequently, the reagent disc 9 is moved to b5 (Step S182), and the gripper mechanism 106 is moved to a7 (Step S183). At this time, a distance g1 from the gripper mechanism 106 to the reagent-bottle mounting surface 500 is grasped using the sensor 200 (Step S184).

After that, the reagent disc 9 is moved to a position b7 (omitted for the convenience of illustration) slightly rotated from b5 .(e.g. by one step). (Step S185), and the gripper mechanism 106 is moved to a8 (Step S186). At this time, a distance g2 from the gripper mechanism 106 to the reagent-bottle mounting surface 500 is grasped using the sensor 200 (Step S187).

Lastly, the reagent disc 9 is moved to a position b8 (omitted for the convenience of illustration) slightly rotated from b5 (e.g. -11 step) (Step S188). At this time, a distance g3 from the gripper mechanism 106 to the reagent-bottle mounting surface 500 is grasped using the sensor 200 (Step S189). The grasped distances grasped in Steps S184, S187, and S189 is managed by the controller 21, and the access cover 113 is closed (Step S190).

Moreover, by relating the operation described above, it is possible to grasp the height and inclination of the reagent-bottle mounting surface 500 at all the positions in the inside of the reagent disc 9. In this case, the operation described above requires the absence of the reagent bottle 10 on the reagent disc 9. For example, in the normal analysis routine, the range is narrowed to a place where no reagent bottle 10 is mounted, and it is possible to detect the presence or absence of an abnormality in the height and the inclination of the reagent-bottle mounting surface.

From the description above, the height and inclination of the reagent-bottle mounting surface 500 is grasped from the obtained distances g1, g2, and g3, and it is determined whether an abnormality is present the height and inclination of the reagent-bottle mounting surface 500 (Step S191). For example, determination is made under the conditions such as whether all differences among the distances g1, g2, and g3 are less than a predetermined value.

When it is determined that an abnormality is present, the analyzer issues an alarm not to use the reagent-bottle mounting surface 500 (Step S193), and the process is ended.

In contrast to this, when it is determined that no abnormality is present, the reagent-bottle mounting surface 500 remains usable (Step S192), and the process is ended.

From the description above, data such as the horizontal position to the gripper mechanism 106 of the reagent transport mechanism 101 against the acquired reagent disc 9 or the reagent loading unit 103, the vertical position, and the height and inclination of the reagent-bottle mounting surface of the reagent disc 9 is managed by the controller 21.

These pieces of data are to be acquired for every predetermined timing of the operation of the normal analysis routine or at the time of the operation of maintenance.

Moreover, in the case in which an abnormality of the reagent loading unit 103, the reagent disc 9, or the reagent transport mechanism 101 and the presence or absence of the failure state are determined and are deviated from the reference range and a threshold is exceeded, from which an abnormality is recognized, the controller 21 issues an alarm, from data of variation over time of the acquired distance.

Furthermore, the controller 21 is operable to predict the time of determination at which the reagent loading unit 103, thereagent disc 9, or the reagent transport mechanism 101 becomes abnormal from variation over time to issue an alarm.

As described above, since it is assumed that the stop position of the reagent loading unit 103, the reagent disc 9, or the reagent transport mechanism 101 changes due to aged deterioration and the like, the lifetime of each component is predicted from the transition of acquired position data to issue an alarm.

Moreover, at the time of issuing an alarm, in the setting of the controller 21, it is possible to change alarm level from the deviation amount from the original position data.

For example, when the deviation amount is in the range where the operation related to the registration and removal of the reagent bottle is not affected, an alarm of attracting attention is only issued, and the analyzer is normally usable. Subsequently, in the case in which the threshold that affects the operation related to the registration and removal of the reagent bottle is coming, an alarm that recommends the exchange of the relevant component, and the analyzer is normally usable. Lastly, in the case in which it is determined that the operation related to the registration and removal of the reagent bottle 10 is affected, an alarm that stops the function of registration and removal of the reagent is issued, and the function of the automatic loader mechanism 100 is stopped.

In the case in which it is determined that an abnormality or the failure state is observed, the controller 21 stops only the operation of the reagent transport mechanism 101, and can issue an alarm that transport of the reagent bottle 10 by the reagent transport mechanism 101 is stopped. At this time, the other mechanisms are normally operable, and analysis is feasible as long as the amount of the reagent in the mounted reagent bottle 10 is gone.

Moreover, in the case in which there are multiple reagent discs 9, only the transport of the reagent bottle 10 to the reagent disc 9 is permitted except the reagent disc 9 determined as abnormal, and only the transport of the reagent bottle 10 to the reagent disc 9 determined as abnormal can be stopped.

Although the check functions of the mechanisms described above are examples, the check function described above is provided, and thus it is possible to detect an abnormality in the analyzer to prevent an abnormality state such as a halt of the analyzer under analysis.

Furthermore, in the position adjustment to the reagent disc 9 described above, desirably, the process of measurement results is changed depending on the presence or absence of the reagent bottle 10. For example, desirably, measures are taken such as executing measurement only near the reference member or limiting measurement results acquired around the reference member.

In contrast to this, in the reagent loading unit 103, since the reagent bottle 10 is basically mounted at the time of loading and unloading, specific consideration is unnecessary compared with the reagent disc 9.

Next, the effect of the present embodiment will be described.

The automatic analyzer of the present embodiment 1000 described above includes the rib 300 provided on the reagent disc 9 or the rib 400 provided on the reagent loading unit 103, the reflective sensor 200 provided on the reagent transport mechanism 101 to detect the ribs 300 and 400, and the controller 21 that adjusts the transport parameter of the reagent transport mechanism 101 based on the position of the ribs 300 and 400 detected by the reflective sensor 200. Thus, it is possible to automatically grasp the relative positional relationship (the horizontal direction and the height) between the reagent disc 9 and the mechanism related to loading and unloading the reagent bottle on the analyzer side to reflect the control value on the mechanisms.

Accordingly, since the necessity of adjusting the mechanisms for each product is eliminated, adjustment using a dedicated jig is unnecessary in the case in which the positional displacement of the mechanisms occurs at the time of production or due to aged deterioration in the sliding parts. It is possible to reduce operator workloads compared with the conventional analyzer, and it is possible to reduce the occurrence of a halt of the analyzer compared with the conventional analyzer. Furthermore, it is possible to normally, stably mount the reagent bottle 10 on the reagent disc 9 compared with the conventional analyzer.

Moreover, the reflective sensor 200 can adjust the traveling parameter of the reagent transport mechanism 101 in the horizontal direction by measuring the distance from the standby position to the ribs 300 and 400 in the horizontal direction of the reagent transport mechanism 101.

Furthermore, based on the distance from the standby position to the ribs 300 and 400, by adjusting the amount of movement in the horizontal direction of the reagent transport mechanism 101, it is possible to adjust the distance of travel in the horizontal direction of the reagent transport mechanism 101 without executing manual maintenance, and it is possible to stably transport the reagent bottle 10.

Moreover, by measuring the distance from the standby position to the ribs 300 and 400 in the vertical direction of the reagent transport mechanism 101, the reflective sensor 200 can adjust the traveling parameter in the vertical direction of the reagent transport mechanism 101.

Furthermore, based on the distance from the standby position to the ribs 300 and 400, by adjusting the amount of movement in the vertical direction of the reagent transport mechanism 101, it is possible to adjust the distance of travel in the vertical direction of the reagent transport mechanism 101 without executing manual maintenance, and it is possible to stably transport the reagent bottle 10.

Moreover, by determining an abnormality of the reagent loading unit 103, the reagent disc 9, or the reagent transport mechanism 101 and the presence or absence of the failure state from variation over time the distance from the standby position to the ribs 300 and 400 detected by the reflective sensor 200, it is possible to automatically grasp positional displacement in association with aged deterioration, and it is possible to take measures such as reflection of the displacement amount on the control value before a problem such as a failure occurs. Accordingly, it is possible to restrain a halt of the analyzer due to an abnormality during analysis compared with the conventional analyzer.

Furthermore, it is possible to predict the time of determination at which the reagent loading unit 103, the reagent disc 9, or the reagent transport mechanism 101 becomes abnormal or a failure state from variation over time, and it is possible to take measures early before a problem such as a failure by issuing an alarm.

Moreover, in the case in which it is determined that at least any of the reagent loading unit 103, the reagent disc 9, or the reagent transport mechanism 101 is abnormal or in the failure state, only the operation of the reagent transport mechanism 101 is stopped, and an alarm is issued that transport of the reagent bottle 10 by the reagent transport mechanism 101 is stopped. Thus, it is possible to avoid a halt of analysis soon, and it is possible to take measures early. Accordingly, it is possible to lead to stable analysis.

Furthermore, the height and the inclination of the mounting surface 500 is found from variation over time in the distance from the standby position to the rib 300 at a plurality of places, and an abnormality or the failure state of the reagent disc 9 is determined from the inclination, and thus it is possible to automatically determine the presence or absence of aged deterioration in the reagent disc 9 itself.

Moreover, the time of determination is predicted at which the reagent disc 9 becomes abnormal or the failure state from variation over time, and an alarm is issued, and thus it is possible to easily restrain a situation in which the reagent disc 9 itself is unusable compared with the conventional analyzer.

Furthermore, in the case in which there are multiple reagent discs 9, when it is determined that the reagent disc 9 is abnormal or in the failure state, only the transport of the reagent bottle 10 to the reagent disc 9 is permitted except the reagent disc 9 determined as abnormal, and only the transport of the reagent bottle 10 to the reagent disc 9 determined as abnormal is stopped, and thus it is possible to restrain an event that analysis is fully stopped due to the presence of the reagent disc 9 with an abnormality.

### <Others>

Note that the present invention is not limited to the embodiment, which can be variously modified and applied. The foregoing embodiment is described in detail for easy understanding of the present invention, which is not necessarily limited to ones including all the described configurations.

For example, in Fig. 2, the automatic analyzer including the automatic loader mechanism 100 that automatically loads the reagent bottle 10 onto the reagent disc 9 is taken as an example for description. However, the automatic loader mechanism 100 does not necessarily have to have a form illustrated in Fig. 2 and the like. When the automatic loader mechanism 100 has at least one place where the drive shaft crosses, the present invention is applicable.

Moreover, the case is described in which the sensor is provided on the reagent transport mechanism 101 and the reference member is provided on the reagent disc 9 or the reagent loading unit 103. However, it is possible to provide a form in which instead of the gripper mechanism 106, the sensor 200 is provided on the side of the reagent disc 9 or the reagent loading unit 103 and the transport parameter of the reagent transport mechanism 101 is controlled based on the position of the reference member provided on the reagent transport mechanism 101. Even in such a form, it is possible to obtain the effect similar to the foregoing embodiment.

Furthermore, the case is described in which the reference member is the ribs 300 and 400 that define the reagent bottle 10. However, other than the ribs 300 and 400, at least any one of a marker provided on the reagent transport mechanism 101, the reagent disc 9, or the reagent loading unit 103 or a recess or a projection indicating a position at which the reagent bottle 10 is mounted can be a reference member, and it is possible to obtain similar effects. Specifically, in the case in which the reference member is a marker, the reference member is made detachable. When the reference member is made detachable in this manner, it is possible to easily apply the present invention to the existing analyzer, and the reference member may be attached when adjustment is necessary. Thus, it is possible to almost eliminate possibilities that cause problems in the operation and the like in the normal analysis operation and the like.

Moreover, the case is described in which the sensor is the reflective sensor 200 formed of the light source 210 and the detector 211 that detects light emitted from the light source 210 and reflected off the reference member. However, the sensor can be at least any of a camera that images the reference member and a laser displacement gage that measures the distance to the reference member instead of the reflective sensor 200.

### List of Reference Signs

1 Reaction disc
2 Reaction container
3 Washing mechanism
4 Spectrophotometer
4a Light source
5, 6 Stirring mechanism
7, 8 Reagent dispensing mechanism
7a, 8a Reagent probe
9 Reagent disc (reagent storage unit)
10 Reagent bottle
11 Sample dispensing mechanism
11a Sample probe
13 Washing tank
15 Sample container
16 Rack
17 Sample transport mechanism
18 Reagent syringe
19 Sample syringe
20 Washing pump
21 Controller
21a Display
30, 31, 32, 33 Washing tank
100 Automatic loader mechanism
100 Reagent transport mechanism (reagent transport unit)
102 Reagent loading mechanism
103 Reagent loading unit
104 Lid opening mechanism
105 Needle
106 Gripper mechanism
106a Hook
108 Needle washing tank
109 Needle drying port
111 Aspiration port
112 Lid
113 Access cover
115 RFID sensor
117 Strut
118 Metal plate
131 Horizontal drive motor
132 Vertical drive motor
134 Drive motor
200 Sensor
201 Optical axis
210 Light source
211 Detector
300, 300a, 300b, 300c, 300d, 300e, 300f, 300g, 300hi Rib (in reagent disc)
400, 400a, 400b, 400c, 300d, 400e, 400f, 400g Rib (in reagent loading unit)
500 Reagent-bottle mounting surface (of reagent disc)
600 Reagent-bottle mounting surface (of reagent loading unit)
900 Gap between rib and reagent bottle
1000 Automatic analyzer

## Claims

1. An automatic analyzer, comprising:
a reagent storage unit (9) to store a reagent bottle (10) containing a reagent to be reacted with a sample;
a reagent loading unit (103) on which a reagent bottle (10) is mounted, the reagent bottle (10) containing a reagent to be reacted with a sample;
a reagent transport unit (101) to transport the reagent bottle (10) to the reagent storage unit (9);
a reference member provided in one unit of the reagent storage unit (9) and the reagent transport unit (101), the reference member is at least one of a rib dividing the reagent bottle (10), a marker, a concave indicating a position at which the reagent bottle (10) is mounted, and a convex indicating a position at which the reagent bottle (10) is mounted;
a sensor (200) provided in the other unit of the reagent storage unit (9) and the reagent transport unit (101), the other unit having no reference member, and detecting the reference member, the sensor is at least one of a reflection sensor comprising a light source (210) and a detector (211) that detects light emitted from the light source (210) and reflected by the reference member, a camera capturing an image of the reference member, and a laser displacement meter measuring a distance to the reference member; and
a controller (21) that adjusts a transport parameter of the reagent transport unit (101) using a position of the reference member detected by the sensor (200),
wherein the sensor (200) measures a vertical distance from the standby position of the reagent transport unit (101) to the reference member,
**characterized in that**
the controller (21) determines whether an abnormal or failed state of one unit of the reagent loading unit (103), the reagent storage unit (9), and the reagent transport unit (101) occurs based on time-dependent change of the distance from the standby position to the reference member detected by the sensor (200).

2. An automatic analyzer, comprising:
a reagent loading unit (103) on which a reagent bottle (10) is mounted, the reagent bottle (10) containing a reagent to be reacted with a sample;
a reagent storage unit (9) to store the reagent bottle (10) ;
a reagent transport unit (101) to transport the reagent bottle (10) from the reagent loading unit (103) to the reagent storage unit (9);
a reference member provided in one unit of the reagent loading unit (103) and the reagent transport unit (101), the reagent transport unit (101) is at least one of a rib dividing the reagent bottle (10), a marker, a concave indicating a position at which the reagent bottle (10) is mounted, and a convex indicating a position at which the reagent bottle (10) is mounted;
a sensor (200) provided in the other unit of the reagent loading unit (103) and the reagent transport unit (101), the other unit having no reference member, and detecting the reference member, the sensor (200) is at least one of a reflection sensor comprising a light source (210) and a detector (211) that detects light emitted from the light source (210) and reflected by the reference member, a camera capturing an image of the reference member, and a laser displacement meter measuring a distance to the reference member; and
a controller (21) that adjusts a transport parameter of the reagent transport unit (101) using a position of the reference member detected by the sensor (200),
wherein the sensor (200) measures a vertical distance from the standby position of the reagent transport unit (101) to the reference member,
**characterized in that**
the controller (21) determines whether an abnormal or failed state of one unit of the reagent loading unit (103), the reagent storage unit (9), and the reagent transport unit (101) occurs based on time-dependent change of the distance from the standby position to the reference member detected by the sensor (200).

3. The automatic analyzer according to claim 2, further comprising a reagent loading unit (103) on which the reagent bottle (10) is mounted, the reagent loading unit (103) being provided with the reference member,
wherein the reagent transport unit (101) transports the reagent bottle (10) from the reagent loading unit (103) to the reagent storage unit (9), and
wherein the sensor (200) detects the reference member provided in the reagent loading unit (103).

4. The automatic analyzer according to claim 1 or 2, wherein the sensor (200) measures a horizontal distance from a standby position of the reagent transport unit (101) to the reference member.

5. The automatic analyzer according to claim 4, wherein the controller (21) adjusts a horizontal travel distance of the reagent transport unit (101) using the distance from the standby position to the reference member.

6. The automatic analyzer according to claim 1 or 2, wherein the controller (21) adjusts a vertical travel distance of the reagent transport unit (101) using the distance from the standby position to the reference member.

7. The automatic analyzer according to claim 1 or 2, wherein the controller (21) predicts time at which one unit of the reagent loading unit (103), the reagent storage unit (9), and the reagent transport unit (101) is determined to be into an abnormal or failed state based on the time-dependent change, and issues an alarm.

8. The automatic analyzer according to claim 1 or 2, wherein when at least one unit of the reagent loading unit (103), the reagent storage unit (9), and the reagent transport unit (101) is determined to be in the abnormal or failed state, the controller (21) suspends operation of only the reagent transport unit (101), and issues an alarm indicating suspension of transport of the reagent bottle (10) by the reagent transport unit (101).

9. The automatic analyzer according to claim 1 or 2, wherein the controller (21) determines height and inclination of the reference member based on the time-dependent change of the distance from the standby position to the reference member in a plurality of areas, and determines an abnormal or failed state of the reagent storage unit (9) based on the inclination.

10. The automatic analyzer according to claim 9, wherein the controller (21) predicts time at which the reagent storage unit (9) is determined to be into the abnormal or failed state based on the time-dependent change, and issues an alarm.

11. The automatic analyzer according to claim 9,
wherein the automatic analyzer comprises a plurality of the reagent storage units, and
wherein when at least one of the reagent storage units is determined to be in the abnormal or failed state, the controller (21) exclusively permits transport of the reagent bottle (10) to any reagent storage unit (9) other than the reagent storage unit (9) determined to be abnormal, and suspends transport of the reagent bottle (10) to the reagent storage unit (9) determined to be abnormal.

## Patentansprüche

1. Automatischer Analysator, der umfasst:
eine Reagenzlagereinheit (9) zum Lagern einer Reagenzflasche (10), die ein Reagenz enthält, das mit einer Probe zur Reaktion gebracht werden soll;
eine Reagenzladeeinheit (103), auf der eine Reagenzflasche (10) angebracht ist, wobei die Reagenzflasche (10) ein Reagenz, das mit einer Probe zur Reaktion gebracht werden soll, enthält;
eine Reagenztransporteinheit (10), um die Reagenzflasche (10) zu der Reagenzlagereinheit (9) zu transportieren;
ein Referenzelement, das in einer Einheit der Reagenzlagereinheit (9) und der Reagenztransporteinheit (101) vorgesehen ist, wobei das Referenzelement eine Rippe, die die Reagenzflasche (10) unterteilt, und/oder eine Markierung und/oder eine Höhlung, die eine Position, an der die Reagenzflasche (10) angebracht ist, angibt, und/oder eine Wölbung, die eine Position, an der die Reagenzflasche (10) angebracht ist, angibt, ist;
einen Sensor (200), der in der anderen Einheit der Reagenzlagereinheit (9) und der Reagenztransporteinheit (101) vorgesehen ist, wobei die andere Einheit keine Referenzelement besitzt, und der das Referenzelement detektiert, wobei der Sensor ein Reflexionssensor, der eine Lichtquelle (210) und einen Detektor (211), der von der Lichtquelle (210) ausgesendetes und durch das Referenzelement reflektiertes Licht detektiert, umfasst, und/oder eine Kamera, die ein Bild des Referenzelements aufnimmt, und/oder ein Laserverschiebungsmessgerät, das einen Abstand zu dem Referenzelement misst, umfasst; und
eine Steuereinheit (21), die einen Transportparameter der Reagenztransporteinheit (101) unter Verwendung einer durch den Sensor (200) detektierten Position des Referenzelements anpasst,
wobei der Sensor (200) einen vertikalen Abstand von der Bereitschaftsposition der Reagenztransporteinheit (101) zu dem Referenzelement misst,
**dadurch gekennzeichnet, dass**
die Steuereinheit (21) anhand einer zeitabhängigen Änderung des durch den Sensor (200) detektierten Abstands von der Bereitschaftsposition zu dem Referenzelement bestimmt, ob ein anomaler oder fehlerhafter Zustand einer Einheit der Reagenzladeeinheit (103), der Reagenzlagereinheit (9) und der Reagenztransporteinheit (101) auftritt.

2. Automatischer Analysator, der umfasst:
eine Reagenzladeeinheit (103), auf der eine Reagenzflasche (10) angebracht ist, wobei die Reagenzflasche (101) ein Reagenz enthält, das mit einer Probe zur Reaktion gebracht werden soll;
eine Reagenzlagereinheit (9) zum Lagern der Reagenzflasche (10);
eine Reagenztransporteinheit (10) zum Transportieren der Reagenzflasche (10) von der Reagenzladeeinheit (103) zu der Reagenzlagereinheit (9);
ein Referenzelement, das in einer Einheit der Reagenzladeeinheit (103) und der Reagenztransporteinheit (101) vorgesehen ist, wobei die Referenztransporteinheit (101) eine Rippe, die die Reagenzflasche (10) unterteilt, und/oder eine Markierung und/oder eine Höhlung, die eine Position, an der die Reagenzflasche (10) angebracht ist, angibt, und/oder eine Wölbung, die eine Position, an der die Reagenzflasche (10) angebracht ist, angibt, ist;
einen Sensor (200), der in der anderen Einheit der Reagenzladeeinheit (103) und der Reagenztransporteinheit (101) vorgesehen ist, wobei die andere Einheit kein Referenzelement besitzt, und der das Referenzelement detektiert, wobei der Sensor (200) ein Reflexionssensor, der eine Lichtquelle (210) und einen Detektor (211), der von der Lichtquelle (210) ausgesendetes und durch das Referenzelement reflektiertes Licht detektiert, umfasst, und/oder eine Kamera, die ein Bild des Referenzelements aufnimmt, und/oder ein Laserverschiebungsmessgerät, das einen Abstand zu dem Referenzelement misst, ist; und
eine Steuereinheit (21), die einen Transportparameter der Reagenztransporteinheit (101) unter Verwendung einer durch den Sensor (200) detektierten Position des Referenzelements anpasst,
wobei der Sensor (200) einen vertikalen Abstand von der Bereitschaftsposition der Reagenztransporteinheit (101) zu dem Referenzelement misst,
**dadurch gekennzeichnet, dass**
die Steuereinheit (21) anhand einer zeitabhängigen Änderung des durch den Sensor detektierten Abstands von der Bereitschaftsposition zu dem Referenzelement bestimmt, ob ein anomaler oder fehlerhafter Zustand einer Einheit der Reagenzladeeinheit (103), der Reagenzlagereinheit (9) und der Reagenztransporteinheit (101) auftritt.

3. Automatischer Analysator nach Anspruch 2, der ferner eine Reagenzladeeinheit (103) umfasst, auf der die Reagenzflasche (10) angebracht ist, wobei die Reagenzladeeinheit (103) mit dem Referenzelement ausgestattet ist,
wobei die Reagenztransporteinheit (101) die Reagenzflasche (10) von der Reagenzladeeinheit (103) zu der Reagenzlagereinheit (9) transportiert und
wobei der Sensor (200) das in der Reagenzladeeinheit (103) vorgesehene Referenzelement detektiert.

4. Automatischer Analysator nach Anspruch 1 oder 2, wobei der Sensor (200) einen horizontalen Abstand von einer Bereitschaftsposition der Reagenztransporteinheit (101) zu dem Referenzelement misst.

5. Automatischer Analysator nach Anspruch 4, wobei die Steuereinheit (21) einen horizontalen Wegabstand der Reagenztransporteinheit (101) unter Verwendung des Abstands von der Bereitschaftsposition des Referenzelements anpasst.

6. Automatischer Analysator nach Anspruch 1 oder 2, wobei die Steuereinheit (21) einen vertikalen Wegabstand der Reagenztransporteinheit (101) unter Verwendung des Abstands von der Bereitschaftsposition zu dem Referenzelement anpasst.

7. Automatischer Analysator nach Anspruch 1 oder 2, wobei die Steuereinheit (21) anhand der zeitabhängigen Änderung eine Zeit vorhersagt, zu der bestimmt wird, dass eine Einheit der Reagenzladeeinheit (103), der Reagenzlagereinheit (9) und der Reagenztransporteinheit (101) in einem anomalen oder fehlerhaften Zustand ist und einen Alarm ausgibt.

8. Automatischer Analysator nach Anspruch 1 oder 2, wobei dann, wenn bestimmt wird, dass die Reagenzladeeinheit (103) und/oder die Reagenzlagereinheit (9) und/oder die Reagenztransporteinheit (101) in dem anomalen oder fehlerhaften Zustand ist, die Steuereinheit (21) nur den Betrieb der Reagenztransporteinheit (101) aussetzt, und einen Alarm ausgibt, der eine Einstellung des Transports der Reagenzflasche (10) durch die Reagenztransporteinheit (101) angibt.

9. Automatischer Analysator nach Anspruch 1 oder 2, wobei die Steuereinheit (21) eine Höhe und eine Neigung des Referenzelements anhand der zeitabhängigen Änderung des Abstands von der Bereitschaftsposition zu dem Referenzelement in mehreren Bereichen bestimmt und einen anomalen oder fehlerhaften Zustand der Reagenzlagereinheit (9) anhand der Neigung bestimmt.

10. Automatischer Analysator nach Anspruch 9, wobei die Steuereinheit (21) eine Zeit, zu der bestimmt wird, dass die Reagenzlagereinheit (9) in dem anomalen oder fehlerhaften Zustand ist, anhand der zeitabhängigen Änderung vorhersagt und einen Alarm ausgibt.

11. Automatischer Analysator nach Anspruch 9,
wobei der automatische Analysator mehrere der Reagenzlagereinheiten umfasst und
wobei dann, wenn bestimmt wird, dass mindestens eine der Reagenzlagereinheiten in dem anomalen oder fehlerhaften Zustand ist, die Steuereinheit (21) ausschließlich einen Transport der Reagenzflasche (10) zu einer beliebigen Reagenzlagereinheit (9), die von der Reagenzlagereinheit (9) verschieden ist, von der bestimmt wurde, dass sie anomal ist, erlaubt und den Transport der Reagenzflasche (10) zu der Reagenzlagereinheit (9), von der bestimmt wurde, dass sie anomal ist, aussetzt.

## Revendications

1. Analyseur automatique, comprenant :
une unité de stockage de réactif (9) pour stocker une bouteille de réactif (10) contenant un réactif devant être mis à réagir avec un échantillon ;
une unité de chargement de réactif (103) sur laquelle est montée une bouteille de réactif (10), la bouteille de réactif (10) contenant un réactif devant être mis à réagir avec un échantillon ;
une unité de transport de réactif (101) pour transporter la bouteille de réactif (10) jusqu'à l'unité de stockage de réactif (9) ;
un élément de référence prévu sur une unité parmi l'unité de stockage de réactif (9) et de l'unité de transport de réactif (101), l'élément de référence étant au moins un élément parmi une nervure divisant la bouteille de réactif (10), une marque, un élément concave indiquant une position à laquelle est montée la bouteille de réactif (10), et un élément convexe indiquant une position à laquelle est montée la bouteille de réactif (10);
un capteur (200) prévu dans l'autre unité parmi l'unité de stockage de réactif (9) et l'unité de transport de réactif (101), l'autre unité n'ayant aucun élément de référence, et détectant l'élément de référence, le capteur étant au moins un élément parmi un capteur de réflexion comprenant une source de lumière (210) et un détecteur (211) qui détecte une lumière émise depuis la source de lumière (210) et réfléchie par l'élément de référence, une caméra capturant une image de l'élément de référence, et un appareil de mesure de déplacement laser mesurant une distance jusqu'à l'élément de référence ; et
un contrôleur (21) qui ajuste un paramètre de transport de l'unité de transport de réactif (101) à l'aide d'une position de l'élément de référence détecté par le capteur (200),
dans lequel le capteur (200) mesure distance verticale depuis la position de veille de l'unité de transport de réactif (101) jusqu'à l'élément de référence,
**caractérisé en ce que**
le contrôleur (21) détermine si un état anormal ou défaillant d'une unité parmi l'unité de chargement de réactif (103), l'unité de stockage de réactif (9), et l'unité de transport de réactif (101) se produit sur la base d'un changement de la distance, en fonction du temps, depuis la position de veille jusqu'à l'élément de référence détecté par le capteur (200).

2. Analyseur automatique, comprenant :
une unité de chargement de réactif (103) sur laquelle est montée une bouteille de réactif (10), la bouteille de réactif (10) contenant un réactif devant être mis à réagir avec un échantillon ;
une unité de stockage de réactif (9) pour stocker la bouteille de réactif (10) ;
une unité de transport de réactif (101) pour transporter la bouteille de réactif (10) depuis l'unité de chargement de réactif (103) jusqu'à l'unité de stockage de réactif (9) ;
un élément de référence prévu sur une unité parmi l'unité de chargement de réactif (103) et l'unité de transport de réactif (101), l'unité de transport de réactif (101) étant au moins un élément parmi une nervure divisant la bouteille de réactif (10), une marque, un élément concave indiquant une position à laquelle est montée la bouteille de réactif (10), et un élément convexe indiquant une position à laquelle est montée la bouteille de réactif (10);
un capteur (200) prévu sur l'autre unité parmi l'unité de chargement de réactif (113) et l'unité de transport de réactif (101), l'autre unité n'ayant aucun élément de référence, et détectant l'élément de référence, le capteur (200) étant au moins un élément parmi un capteur de réflexion comprenant une source de lumière (210) et un capteur (211) qui détecte une lumière émise depuis la source de lumière (210) et réfléchie par l'élément de référence, une caméra capturant l'image de l'élément de référence, et un appareil de mesure de déplacement laser mesurant une distance jusqu'à l'élément de référence ; et
un contrôleur (21) qui ajuste un paramètre de transport de l'unité de transport de réactif (101) à l'aide d'une position de l'élément de référence détectée par le capteur (200),
dans lequel le capteur (200) mesure une distance verticale depuis la position de veille de l'unité de transport de réactif (101) jusqu'à l'élément de référence,
**caractérisé en ce que**
le contrôleur (21) détermine si un état anormal ou défaillant d'une unité parmi l'unité de chargement de réactif (103), l'unité de stockage de réactif (9), et
l'unité de transport de réactif (101) se produit sur la base d'un changement de la distance, en fonction du temps, depuis la position de veille jusqu'à l'élément de référence détecté par le capteur (200).

3. Analyseur automatique selon la revendication 2, comprenant en outre une unité de chargement de réactif (102) sur laquelle est montée la bouteille de réactif (10), l'unité de chargement de réactif (103) étant dotée de l'élément de référence,
dans lequel l'unité de transport de réactif (101) transporte la bouteille de réactif (10) depuis l'unité de chargement de réactif (103) jusqu'à l'unité de stockage de réactif (9), et
dans lequel le capteur (200) détecte l'élément de référence prévu dans l'unité de chargement de réactif (103).

4. Analyseur automatique selon la revendication 1 ou 2, dans lequel le capteur (200) mesure une distance horizontale depuis une position de veille de l'unité de transport de réactif (101) jusqu'à l'élément de référence.

5. Analyseur automatique selon la revendication 4, dans lequel le contrôleur (21) ajuste une distance de déplacement horizontal de l'unité de transport de réactif (101) à l'aide de la distance depuis la position de veille jusqu'à l'élément de référence.

6. Analyseur automatique selon la revendication 1 ou 2, dans lequel le contrôleur (21) ajuste une distance de déplacement vertical de l'unité de transport de réactif (101) à l'aide de la distance depuis la position de veille jusqu'à l'élément de référence.

7. Analyseur automatique selon la revendication 1 ou 2, dans lequel le contrôleur (21) prédit un moment auquel une unité parmi l'unité de chargement de réactif (103), l'unité de stockage de réactif (9), et l'unité de transport de réactif (101) est déterminée comme étant dans un état anormal ou défaillant sur la base du changement en fonction du temps, et émet une alarme.

8. Analyseur automatique selon la revendication 1 ou 2, dans lequel, quand au moins une unité parmi l'unité de chargement de réactif (103), l'unité de stockage de réactif (9), et l'unité de transport de réactif (101) est déterminée comme étant dans l'état anormal ou défaillant, le contrôleur (21) suspend un fonctionnement uniquement de l'unité de transport de réactif (101) et émet une alarme indiquant une suspension du transport de la bouteille de réactif (10) par l'unité de transport de réactif (101).

9. Analyseur automatique selon la revendication 1 ou 2, dans lequel le contrôleur (21) détermine une hauteur et une inclinaison de l'élément de référence sur la base du changement de la distance, en fonction du temps, depuis la position de veille jusqu'à l'élément de référence dans une pluralité de zones, et détermine un état anormal ou défaillant de l'unité de stockage de réactif (9) sur la base de l'inclinaison.

10. Analyseur automatique selon la revendication 9, dans lequel le contrôleur (21) prédit un moment auquel l'unité de stockage de réactif (9) est déterminée comme étant dans l'état anormal ou défaillant sur la base du changement en fonction du temps, et émet une alarme.

11. Analyseur automatique selon la revendication 9,
dans lequel l'analyseur automatique comprend une pluralité d'unités de stockage de réactif, et
dans lequel, quand l'une au moins des unités de stockage de réactif est déterminée comme étant dans l'état anormal ou défaillant, le contrôleur (21) permet exclusivement un transport de la bouteille de réactif (10) jusqu'à une unité de stockage de réactif (9) quelconque autre que l'unité de stockage de réactif (9) déterminée comme étant anormale, et suspend un transport de la bouteille de réactif (10) jusqu'à l'unité de stockage de réactif (9) déterminée comme étant anormale.
